(19)

Europäisches
Patentamt
European
Patent Office
Office européen
des brevets

(11) **EP 4 678 368 A1**

(12) **EUROPEAN PATENT APPLICATION**

(43) Date of publication:
**14.01.2026 Bulletin 2026/03**

(21) Application number: 24187509.5

(22) Date of filing: **09.07.2024**

(51) International Patent Classification (IPC):
**B29B 17/02** $^{(2006.01)}$ **B29B 17/04** $^{(2006.01)}$

(52) Cooperative Patent Classification (CPC):
**B29B 17/02; B29B 17/04;** B29B 2017/0021;
B29B 2017/0244; B29B 2017/0265;
B29B 2017/0279; B29B 2017/0293; B29K 2027/00;
B29K 2027/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Vynova Holding S.A.**
**1313 Luxembourg (LU)**

(72) Inventors:
 • Colemonts, Christel
  3980 Tessenderlo (BE)
 • Lasuye, Thierry
  62670 Mazingarbe (FR)
 • Cornelissen, Evert
  3980 Tessenderlo (BE)

(74) Representative: **Herzog IP Patentanwalts GmbH**
**Steinstraße 16-18**
**40212 Düsseldorf (DE)**

(54) **PROCESS FOR THE RECYCLING OF PVC**

(57) The invention relates to a process of making a vinyl halide polymer comprising at least these steps: i) Providing a stream of pieces, wherein the pieces have a size of at most 120 mm and a density of 1.60 g/cm$^3$ at most, wherein the pieces comprise a plastic composition, which comprises at least 10 wt.% of the vinyl halide polymer, ii) adding an aqueous phase comprising at least one sort of powder particles, wherein the aqueous phase has a density of **D** in the range from 1.2 to 1.35 g/cm$^3$; iii) forming a common phase of the stream of pieces and the aqueous phase; iv) dividing the common phase into a first intermediate phase and a second one, wherein the first intermediate phase comprises first pieces of a density of more than **D** and the second intermediate phase pieces of a density of **D** at most; v) separating the first pieces from the first phase and vi) shredding them to form a stream of particles of a particle size in the range from 3 to 15 mm; vii) dividing the particles into a first and a further fraction using electrostatic plastic separation, wherein the first fraction contains more particles of the vinyl halide polymer than the further fraction(s).

101 ⟩ 102 ⟩ 103 ⟩ 104 ⟩ 105 ⟩ 106 ⟩ 107

Fig. 1

EP 4 678 368 A1

## Description

The invention relates to a process of making vinyl halide polymer comprising at least these steps: i) Providing a stream of pieces, wherein the pieces have a size of at most 120 mm and a density of 1.6 g/cm$^3$ at most, wherein at least 10 wt.% of the pieces comprise the vinyl halide polymer, ii) adding an aqueous phase comprising at least one sort of powder particles, wherein the aqueous phase has a density of $D$ in the range from 1.2 to 1.35 g/cm$^3$; iii) forming a common phase of the stream of pieces and the aqueous phase; iv) dividing the common phase into a first intermediate phase and a second one, wherein the first intermediate phase comprises first pieces of a density of more than $D$ and the second intermediate phase pieces of a density of $D$ at most; v) separating the first pieces from the first phase and vi) shredding them to particles, which form a stream of particles of a particle size in the range from 3 to 15 mm; vii) dividing the particles into a first and a further fraction using at least one electrostatic plastic separation, wherein the first fraction contains more particles of the vinyl halide polymer than the further fraction(s).

BACKGROUND OF THE INVENTION

Vinyl halide polymers such as poly vinyl chloride (PVC) are widely used for the manufacture of a variety of articles. They are used, for example, for the manufacture of sheets - generally reinforced with reinforcing fibers - intended for covering soils, for covering vehicles (trucks), for the concealing of buildings on which work is being carried out, for the construction of sets for entertainments or exhibitions, or for advertising purposes. Furthermore, in many applications, their lifetime is short, typically a few weeks or months. For these reasons, large quantities of PVC are scrapped each year. The process of recycling them consequently constitutes a major ecological and economic problem.

The same situation applies with regard to other articles based on one or more, flexible or rigid, vinyl halide polymers (preferably PVC) for example with regard to conveyor belts, coated fabrics and other elements for the interior furnishing of vehicles, pipes and hoses, window frames or polymer-insulated power cables.

Thorough grinding of these articles usually results in a mixture of fine particles of heterogeneous composition, which is difficult to purify and reuse. Furthermore, in the case of fiber-reinforced articles (for example, polyester or nylon-fiber-reinforced articles), the fibers often form a kind of wadding which makes it much more complicated to reuse the ground particles.

Various approaches are known to separate PVC containing waste streams to recover the PVC and other plastics as a resource for reuse, mainly mechanical and chemical concepts for separation or isolation of PVC. However, depending on purpose and side conditions, there remains quite a lot of room for improving.

OBJECTIVES

It is an object of the present invention to overcome, at least in part, one or more of the disadvantages resulting from the prior art.

Another object of the invention is to recycle waste PVC and/or PVC plastic compositions for a second lifecycle.

Another object of the invention is to provide a method to treat waste PVC and/or PVC plastic compositions in order to make it a raw material for a second lifecycle.

It is an object of the invention to provide a method to treat waste PVC and/or PVC plastic compositions in order to make it a raw material for a second lifecycle thereby preserving the properties from the previous application.

It is an object of the invention to provide a method to treat waste PVC and/or PVC plastic compositions in order to make it a raw material for a second lifecycle as a high-quality product.

It is an object of the invention to provide a method to treat waste PVC and/or PVC plastic compositions in order to make it a raw material for the same use as before.

It is an object of the invention to use waste PVC and/or PVC plastic compositions from construction and to prepare a raw material for the manufacture of articles used in construction.

It is an object of the invention to provide a method to recycle PVC and/or PVC plastic compositions with less energy consumption than known recycling processes.

It is an object of the invention to provide a method to recycle PVC and/or PVC plastic compositions at room temperature or slightly elevated temperature.

It is an object of the invention to provide a method to separate PVC and/or PVC plastic compositions from other materials, such as other plastics, highly filled plastics, crosslinked plastics and non-plastic materials at room temperature or slightly elevated temperature.

It is an object of the invention to provide a method to separate waste PVC and/or PVC plastic compositions into unplasticized PVC and PVC plastic compositions, plasticized PVC and PVC plastic compositions, and other waste.

It is an object of the invention to provide a method to separate waste PVC and/or PVC plastic compositions from highly filled plastics at room temperature or slightly elevated temperature.

It is an object of the invention to provide a method to recycle PVC and/or PVC plastic compositions to a raw material for a second lifecycle without heating.

It is an object of the invention to provide a method to recycle PVC and/or PVC plastic compositions to a raw material for a second lifecycle substantially without using any organic solvents.

It is an object of the invention to provide a method to recycle PVC and/or PVC plastic compositions to a raw material for a second lifecycle substantially without swelling or dissolving the PVC.

It is an object of the invention to provide a method to recycle PVC and/or PVC plastic compositions avoiding any dissolution of the plastic composition or distillation of solvent steps in order to reduce the energy consumption of the process.

It is an object of the invention to provide a method to separate unplasticized PVC and/or plastic composition of unplasticized PVC from other materials, such as other plastics, highly filled plastics, crosslinked and highly filled plastics and non-plastic materials, such as glass, metals, mud without heating.

It is an object of the invention to separate waste PVC and/or PVC plastic compositions parts from other parts of at least slightly different density in an effective manner.

It is another object of the invention to separate waste PVC and/or PVC plastic compositions parts from other parts of at least slightly different density in an effective manner without removing any additives from the PVC, and the PVC plastic composition respectively.

It is another object of the invention to separate waste PVC plastic parts from other parts of at least slightly different density in an effective manner and to remove additives from the PVC plastic.

Another object of the invention is to recover or recycle unplasticized PVC and/or PVC plastic compositions from waste PVC comprising plasticized PVC.

It is another object of the invention to prepare recycled PVC and/or PVC plastic compositions in high purity.

It is another object of the invention to prepare recycled PVC and/or PVC plastic compositions in high purity but preserving additives present in the PVC and/or PVC plastic compositions respectively.

It is another object of the invention to prepare recycled PVC and/or PVC plastic compositions in high purity free of other plastic or inorganic components and free of any additives to the PVC.

It is an object of the invention to provide a method to recycle PVC and/or PVC plastic compositions avoiding organic solvents as much as possible.

It is an object of the invention to use waste PVC and/or PVC plastic compositions from construction and to prepare a raw material for the manufacture of articles used in construction without depletion of the additives from the PVC and/or PVC plastic composition respectively.

It is an object of the invention to use waste PVC and/or PVC plastic compositions from construction and to prepare a raw material for the manufacture of articles used in construction thereby preserving the additives from the waste PVC and/or PVC plastic composition respectively.

Another object of the invention is to avoid the generation of hazardous waste when recycling PVC and/or PVC plastic compositions from waste PVC plastic compositions for a second lifecycle.

Another object of the invention is to avoid the generation of hazardous waste, such as organic and inorganic lead compounds, and/or phthalates, when recycling PVC and/or PVC plastic compositions from waste PVC plastic compositions for a second lifecycle.

An object of the invention is to employ less organic volatile organic compounds, such as solvents, than in known processes of PVC recycling.

An object of the invention is to reduce a risk of environmental damages than in known processes of PVC recycling.

An object of the invention is to use aqueous phases in the process of recycling of PVC and/or PVC plastic compositions.

An object of the invention is to provide a process of recycling waste PVC and/or PVC plastic compositions for a second lifecycle in construction materials, whereby no addition of pigments is necessary.

Another object is to provide articles of recycled PVC and/or recycled PVC plastic compositions which have the same or at least comparable properties compared with the same article made from mechanically recycled PVC plastic compositions, virgin PVC and/or virgin PVC plastic compositions.

Another object of the invention is to provide a method of the manufacture of articles from recycled PVC and/or recycled PVC plastic compositions, where an addition of additives can be avoided.

Another object of the invention is to provide a method of the manufacture of articles from recycled PVC and/or recycled PVC plastic compositions, where additives from the first use can be further used.

Another object is to provide articles of recycled PVC and/or recycled PVC plastic compositions, which have the same or at least comparable properties compared with the same article made from mechanically recycled PVC plastic compositions, virgin PVC and/or virgin PVC plastic compositions.

Another object is to recycle waste PVC and/or PVC plastic compositions for a second lifecycle whereby legacy additives, such as lead compounds and/or phthalates are removed from the PVC and/or PVC plastic compositions in order to obtain a recycled PVC and/or recycled PVC plastic compositions free of these additives.

GENERAL

In the description, range specifications also include the values mentioned as limits. A specification of the type "in the range from X to Y" with respect to a quantity A consequently means that A can assume the values X, Y and values between X and Y. One-sided limited ranges of the kind and "Y at most" for a size A mean accordingly as values Y and smaller than Y.

All numeric values and ranges mentioned in this description are meant to be "about" the value or range. The term "about" means that the value or range needs not to be met with absolute accuracy. "About" means that the numerical value or range can be hit exactly, but further includes a range of about +/- 2 %, based on the referenced value or endpoints of ranges. "About" also includes the exact values as a preferred embodiment. For example, a range mentioned to be from 20 to 80 could have its one end between 19.96 and 20.04, with the exact value of 20.00 being preferred Similarly on the other end, it can mean any value between 78.4 and 81.6, with the exact value of 80.0 being preferred. Accordingly, this range could go from 19.96 to 81.6, or from 19.96 to 78.4, and so forth.

DEFINITIONS

1 Dalton (1 Da) is a unit of mass equal to 1 g/mol, and a 1 kDa equals to 1 kg/mol and 1'000 g/mol. 1 MDa is 1'000'000 Da or 1'000'000 g/mol.

1 Å, or 1 Ångström is a unit of length equal to 0.1 nm, or $10^{-10}$ m.

The molecular weight cut-off (MWCO) of a membrane gives the molecular weight of a dissolved polymer, at which 90 % of the amount of the dissolved polymer is retained by the membrane. For commercial membranes, the MWCO is determined by testing polystyrene dissolved in THF when referring to organic solvents, or Dextran dissolved in water for the aqueous systems.

For example, a sample of a polystyrene with a broad and homogeneous molecular weight distribution is dissolved in THF giving a sample solution. The sample solution is subjected to a membrane separation. Both, the sample solution and the permeate which has passed the membrane are characterized using GPC (gel permeation chromatography) with a refractive index detector. This GPC was calibrated with narrow-PDI polystyrene standard model polymers running THF as solvent. The MWCO is determined by identifying the point at which 90% of the dissolved polymer has passed the membrane. Usually, the MWCO is given by the supplier as part of the technical properties of commercial membranes.

The "size" of pieces and particles in the present context is the mesh size. This means pieces and particles placed atop a mesh of an indicated size, which fall through upon shaking the mesh, are considered to have the indicated size at most.

The $D_{50}$ value indicates that 50 % in volume of the particles, based on the total volume of particles, are smaller than the indicated value. The $D_{10}$ value indicates that 10 % in volume of the particles, based on the total volume of particles, are smaller than the indicated value. The $D_{90}$ value indicates that 90 % in volume of the particles, based on the total volume of particles, are smaller than the indicated value.

A solution of a matter in the context of the present invention is a liquid phase, which is homogeneous, and where no undissolved particles of this matter remain.

A suspension of a matter in the context of the present invention is a liquid phase, in which at least some distinctive particles of the matter remain.

A suspension is considered stable in the context of the present invention, if no phase separation can be observed by visual inspection at no mixing activities (such as stirring) for at least one hour.

EMBODIMENTS OF THE INVENTION

A contribution to the at least partial achievement of at least one of the objectives is provided by the subject-matter of the independent claims. The dependent claims provide preferred embodiments that contribute to the at least partial achievement of at least one of the objectives.

|1| A process of making a vinyl halide polymer comprising at least these steps:

i) Providing a stream of pieces *SP,*

wherein the pieces have a size of at most 120 mm and a density of 1.6 g/cm$^3$ at most;
wherein at least 10 wt.% the pieces comprise the vinyl halide polymer;

ii) adding a first aqueous phase *AP,* wherein aqueous phase *AP* has a density *D;*

iii) forming a common phase *P* of the pieces and the aqueous phase *AP*;

iv) dividing the common phase *P* into a first intermediate phase *IPH* and a second intermediate phase *IPL,* wherein

the first intermediate phase *IPH* comprises pieces of a density of more than *D* and
the second intermediate phase *IPL* comprises pieces of a density of *D* at most;

v) separating the first pieces from the first intermediate phase *IPH,*

vi) shredding the first pieces from step v) to particles which form a stream of particles of a particle size in the range from 3 to 15 mm;

vii) dividing the particles into a first and a further fraction of particles using at least one electrostatic plastic separation step, wherein the first fraction contains more particles comprising the vinyl halide polymer than the further fraction(s).

121 The process of embodiment |1|, wherein [a] providing the stream of pieces *SP* comprises at least these steps:

[a1] Providing a feed composition comprising items of a plastic composition, wherein the plastic composition comprises at least 10 wt.% of the vinyl halide polymer;

[a2] shredding the feed composition to items to a size of at most 120 mm to form a stream of pieces.

131 The process of embodiment 121, comprising a further step [a4] downstream of [a3], with

[a3] dividing the stream of pieces into a light fraction *LF* and a heavy fraction *HF* in a second separation step.

|4| The process according to any one of the preceding embodiments, wherein steps i) - iv) are repeated n-times, wherein in each repetition

- the first pieces obtained in the previous repetition are provided in step i) instead of the stream pieces,
- a further aqueous phase *APn* having a further density *Dn* is added in step ii) instead of the first aqueous phase *AP.*
- the dividing in step iv) is made into a first intermediate phase IPH comprising first pieces of a density of more than *Dn,* and the second intermediate phase IPL comprises pieces of a density of *Dn* at most.

|5| The process according to any one of the preceding embodiments, wherein step vii) is repeated n-times, whereby the stream of particles is fed to an electrostatic separator, and a first fraction and a further fraction of particles is obtained, wherein the first fraction of particles contains more vinyl halide polymer particles than the further fraction, and wherein the (n-1)th first fraction is used to feed the next electrostatic separator in the subsequent repetition.

|6| The process according to any one of the preceding claims, wherein a two-stage electrostatic separator is used in step vii).

171 The process according to any one of the preceding embodiments comprising downstream of step vii) at least

viii) the first fraction is dissolved in a liquid organic phase and
ix) a solvent-based separation is applied to the first fraction,

wherein the purity of the vinyl halide polymer in the plastic composition is improved and/or at least some components of low molecular weight are removed.

|8| The process of any one of the preceding embodiments, wherein at least one selected from the group consisting of feed composition, stream of pieces, fraction of objects, particles, fraction *HF* or intermediate phase *IP* and intermediate phase *IPn* is divided into at least two by color using a camera.

|9| The process of any one of the preceding embodiments, wherein a step v-a) is performed after step v) and prior to step vi), wherein step v-a) comprises washing the objects and drying.

1101 The process according to any one of the preceding embodiments, wherein step vii) comprises at least these substeps:

(vii-1) Treating the particles by which treatment the particles become electrically charged;
(vii-2) Applying an electrical field to the particles,
wherein the vinyl halide polymer particles are separated from others according to their electrical charge;
wherein the vinyl halide polymer particles form the first fraction.

|11| The process according to any one of the preceding embodiments, wherein the at least sort of powder particles **PP, PPn** is substantially insoluble in water.

|12| The process according to any one of the preceding embodiments, wherein the density **D** is in the range from 1.2 to 1.35 g/cm$^3$, preferably 1.2 g/cm$^3$.

|13| The process according to any one of the preceding embodiments, wherein the at least sort of powder particles **PP, PPn** is CaCO$_3$

|14| A vinyl halide polymer obtainable by a process according to the first aspect of the invention or one of its embodiments.

|15| An article comprising a vinyl halide polymer as in embodiment |14|, or obtainable by any one of embodiments |1| to |11|.

|16| The article according to embodiment |15|, wherein the article is selected from the group consisting of fiber, a filament, a textile, a film and a formed body, such as pipe, tube, door, shutter or profile, or an object of more complex geometrical shape.

|17| An apparatus comprising at least these modules, in the following order:

(A) A feeder;
(B) A density separator for solids in a carrier liquid;
(C) A drier;
(D) An electrostatic plastic separator.

|18| A use of vinyl halide polymer in an article, wherein the vinyl halide polymer is obtained by the process according to any one of the preceding embodiments |1| through |11|.

|19| A use of a process comprising a density separation in a liquid phase followed by at least one electrostatic separation to obtain recycled vinyl halide polymer from plastic waste.

DETAILED DESCRIPTION OF THE INVENTION

A first aspect of the invention is a process of making a vinyl halide polymer at least following steps:

i) Providing a stream of pieces,

wherein the pieces have a size of at most 120 mm and a density of 1.6 g/cm$^3$ at most;
wherein at least 10 wt.% of the pieces comprise the vinyl halide polymer;

ii) adding a first aqueous phase **AP,** wherein aqueous phase **AP** has a density **D**;
iii) forming a common phase **P** of the pieces and the aqueous phase **AP,**
iv) dividing the common phase **P** into a first intermediate phase **IPH** and a second intermediate phase **IPL,** wherein the first intermediate phase **IPH** comprises first pieces of a density of more than **D**, and the second intermediate phase **IPL** comprises pieces of a density of **D** at most;
v) separating the first pieces from the first intermediate phase **IPH,**
vi) shredding the first pieces from step v) to particles, which form a stream of particles of a particle size in the range from 3 to 15 mm;
vii) dividing the particles into a first and a further fraction using electrostatic plastic separation, wherein the first fraction contains more particles comprising the vinyl halide polymer than the further fraction(s).

In a first embodiment of the first aspect of the invention, the providing in step i) comprises at least these steps:

[a1] Providing a feed composition comprising items of a plastic composition, wherein at least 10 wt.% of the items comprise the vinyl halide polymer;

[a2] shredding the feed composition to items of at most 120 mm to form a stream of pieces; and optionally

[a3] dividing the stream of pieces into a light fraction *LF* and a heavy fraction *HF* in a second separation step.

wherein the light fraction of pieces forms the stream of pieces provided in step i), if this embodiment has a step [a3].

The pieces in the stream of pieces may have a size of 120 mm at most. For example, the pieces have a size of at most 110 mm, 100 mm, 90 mm, 80 mm, 70 mm, 60 mm, 50 mm, 40 mm, 30 mm or 20 mm. For example, the pieces may have a size in the range from 10 to 120 mm, or from 10 to 100 mm, or from 30 to 100 mm, or from 10 to 80 mm, or from 30 to 80 mm.

Further, the pieces have a density of 1.6 g/cm$^3$ at most, for example of 1.5 g/cm$^3$ at most. Usually, they have a minimum density of 0.5 g/cm$^3$.

As mentioned above, at least 10 wt.% of the pieces comprise at least one vinyl halide polymer. The plastic composition can be of any kind known to a skilled person and considered potentially useful for providing in the present process. The plastic composition is often composed of materials and items which were disposed as waste before. So, the present process could be seen as a recycling of vinyl halide polymers and items comprising one or more vinyl halide polymers. The plastic composition is usually composed of solid components. Prior use of these items can be packaging of food, beverages, non-food, liquids, solids and all kinds of other tradable goods. Also, these items can be packaging of construction materials and even construction materials itself, like windows and doors with plastic frames, pipe, flooring, rigid films, profile, sidings, ceilings, medical and food film, medical articles, tubes, bottles, fittings, shoe soles, cables, and so on.

At least 10 wt.% of the pieces comprises at least one vinyl halide polymer, i.e. of one, or a combination of two or more vinyl halide polymers. Accordingly, when the term "vinyl halide polymer" used throughout this description refers to a single vinyl halide polymer, as well as to a combination of two or more vinyl halide polymers. This simplification is made to enhance the legibility of the present text.

For example, at least 15, 20, 25, 30, 35, 40, 45, 50, 55, 60, 65, 70, 75, 80, 85 or 90 wt.% of the pieces comprise the vinyl halide polymer, the wt.% with respect to the total weight of the pieces. For example, in a range from 15 to 99, 20 to 99, 25 to 99, 30 to 99, 35 to 99, 40 to 99, 45 to 99, 50 to 99, 55 to 99, 60 to 99, 65 to 99, 70 to 99, 75 to 99, 80 to 99, 85 to 99, or 90 to 99, or in a range from 15 to 95, 20 to 95, 25 to 95, 30 to 95, 35 to 95, 40 to 95, 45 to 95, 50 to 95, 55 to 95, 60 to 95, 65 to 95, 70 to 95, 75 to 95, 80 to 95, 85 to 95, or 90 to 95, or in a range from 15 to 90, 20 to 90, 25 to 90, 30 to 90, 35 to 90, 40 to 90, 45 to 90, 50 to 90, 55 to 90, 60 to 90, 65 to 90, 70 to 90, 75 to 90, 80 to 90 or 85 to 90 wt.% of the pieces comprise the vinyl halide polymer, the values and ranges all given as wt.%, the wt.% with respect to the total weight of the pieces. The rest of the pieces to 100 wt.% is composed of further constituents, such as other plastics, wood, glass, metal, stone and so on.

The vinyl halide polymer can be of any kind known to and considered suited to be employed in the present invention. The vinyl halide polymers include the homopolymers and copolymers of vinyl halides including, for example, vinyl chloride and vinyl bromide. The term vinyl halide polymers comprise also copolymers of different vinyl halides with each other or copolymers of a vinyl halide with one or more polymerizable olefinic monomers having at least one terminal $CH_2$=C< group. Further, the vinyl halide polymer may comprise additives, for example up to 30 wt.% of additives, for example from 5 to 30 wt.%, or from 10 to 30 wt.%, or from 5 to 25 wt.%, or from 5 to 20 wt.% of additives, the wt.% based on the total amount of vinyl halide polymer.

As examples of such olefinic monomers, there may be mentioned the alpha, beta-olefinically unsaturated carboxylic acids such as acrylic acid, methacrylic acid, ethacrylic acid, alpha-cyanoacrylic acid, etc.; esters of acrylic acid such as methyl acrylate, ethyl acrylate, butyl acrylate, octyl acrylate, cyanoethyl acrylate, etc.; esters of methacrylic acid such as methyl methacrylate, butyl methacrylate, etc.; nitrile such as acrylonitrile, methacrylonitrile, etc.; acrylamides such as methylacryl-amide, N-methylol acrylamide, N-butoxy methylacrylamide, etc.; vinyl ethers such as ethyl vinyl ether, chloroethyl vinyl ether, etc.; the vinyl ketones; styrene and styrene derivatives such as methyl styrene, vinyl toluene, chlorostyrene, etc.; vinyl naphthalene; esters such as allyl or vinyl chloroacetate, vinyl acetate, etc.; vinyl pyridene; methyl vinyl ketone; the diolefins, including butadiene, isoprene, chloroprene, etc.; and other polymerizable olefinic monomers of the types known to those skilled in the art.

Accordingly, there may be mentioned as well-suited vinyl halide polymers polyvinylchloride (PVC), for example soft PVC or rigid PVC; PVC-copolymers such as PVC-co-vinyl acetate polymer, chlorinated PVC, polyvinylidene-co-PVC-polymer, impact modified PVC, and more complex copolymers like PVC/PCTFE-PVDC (sold as Aclar by Honeywell or Kel-F by 3M, Inc.). While rigid PVC usually does not contain plasticizing additives, soft PVC contains plasticizing additives. Plasticizing additives, also referred to as Plasticizers, are added to decrease the PVC's viscosity, such as compounds of the group of phthalates.

The vinyl halide polymers particularly useful in the present invention are homopolymers and copolymers made by the polymerization of vinyl chloride alone or in admixture with one or more polymerizable olefinic monomers copolymerizable therewith. The most preferred vinyl polymer, or resin, is polyvinylchloride (PVC) homopolymer produced by mass polymerization or suspension polymerization. However, it is well understood that the invention may be applied to others of the above-described polymers and is not limited in any way.

In an embodiment of the process according to the first aspect of the invention, at least 10 wt.%, for example at least 15, 20, 25, 30, 35, 40, 45, 50, 55, 60, 65, 70, 75, 80, 85 or at least 90 wt. %, of the pieces comprise PVC and/or a PVC-copolymer, the wt.% with respect to the total stream of pieces.

In an embodiment of the process according to the first aspect of the invention, in a range from 15 to 99 wt.%, 20 to 99 wt.%, 25 to 99 wt.%, 30 to 99 wt.%, 35 to 99 wt.%, 40 to 99 wt.%, 45 to 99 wt.%, 50 to 99 wt.%, 55 to 99 wt.%, 60 to 99 wt.%, 65 to 99 wt.%, 70 to 99 wt.%, 75 to 99 wt.%, 80 to 99 wt.%, 85 to 99 wt.%, or 90 to 99 wt.%, or in a range from 15 to 95 wt.%, 20 to 95 wt.%, 25 to 95 wt.%, 30 to 95 wt.%, 35 to 95 wt.%, 40 to 95 wt.%, 45 to 95 wt.%, 50 to 95 wt.%, 55 to 95 wt.%, 60 to 95 wt.%, 65 to 95 wt.%, 70 to 95 wt.%, 75 to 95 wt.%, 80 to 95 wt.%, 85 to 95 wt.%, or 90 to 95 wt.%, or in a range from 15 to 90 wt.%, 20 to 90 wt.%, 25 to 90 wt.%, 30 to 90 wt.%, 35 to 90 wt.%, 40 to 90 wt.%, 45 to 90 wt.%, 50 to 90 wt.%, 55 to 90 wt.%, 60 to 90 wt.%, 65 to 90 wt.%, 70 to 90 wt.%, 75 to 90 wt.%, 80 to 90 wt.% or 85 to 90 wt.%, of the pieces comprise PVC and/or a PVC-copolymer, the wt.% with respect to the total stream of pieces.

A vinyl halide polymer useful in the process of the invention may have a number-averaged molecular weight of at least 5 kDa. For example, the vinyl halide polymer has a molecular weight of at least 7 kDa, or at least 10 kDa, or at least 15 kDa, or at least 20 kDa, or at least 25 kDa, or at least 50 kDa. For example, the vinyl halide polymer has a molecular weight in the range of 5 kDa to 200 kDa, or from 5 kDa to 120 kDa, or from 10 kDa to 100 kDa, or from 10 kDa to 80 kDa.

The molecular weight of the vinyl halide polymer in this context is the so-called number-averaged molecular weight, also identified as $\overline{M_n}$ or simply $M_n$. The values of $\overline{M_n}$ mentioned here are determined with GPC according to and under observation of the further conditions detailed in the section "test methods". It is common knowledge that the molecular weight information given here is relative to the calibration standard and test conditions employed. Other analytical methods and/or deviation from the testing protocol given in the test method are likely to result in other values for molecular weight. Further it is known that this GPC usually has a cut-off around 500 Da. Constituents of less than this molecular weight cannot be analyzed.

As described with regard to the first embodiment of the invention, the stream of pieces provided in step i) can be present as such, for example as a result from a purchase or pre-treatment.

In an embodiment of the first aspect of the invention, the stream of pieces provided in step i) can be the product of a pre-process. In the pre-process, a feed composition comprising items of a plastic composition, wherein at least 10 wt.% of items comprise the vinyl halide polymer, is provided in [a1]. The items of the feed composition comprise generally the same kind and constitution as the pieces of the stream of pieces. Nevertheless, the items of the feed composition can be larger in size than the pieces in the stream of pieces and comprise also items of different chemical constitution.

For example, the items in the feed composition may comprise items comprising vinyl halide polymer, like PVC. Further, a share of the items in the feed composition may comprise other plastics, for example items comprising at least one element selected from: polyolefins, polystyrene, polyester, polyurethane, ABS, rubber, Acrylates, SAN, PVB, silicones, polyamides, polycarbonates, polyoxymethylene. Further, a share of the items in the feed composition may be inorganic or non-plastic organic solid matter. Examples of non-plastic organic solid matter are wood, paper, carton. Examples of inorganic matter are glass, metal, stone, concrete. Common examples of metal are aluminum and iron-steel.

The items of the feed composition may have in general any size and shape. However, it was found advantageous in terms of handling if the items have a size of 3 meters at most, for example in a range from 10 cm to 3 m, or from 50 cm to 2 m, or from 30 cm to 1.5 m. size in the context of the feed composition refers to the distance between two intersections of a fictious longest straight line with the surface of the item, one can draw through the item.

The items of the feed composition may have a density of 8 $g/cm^3$ at most, for example from 0.8 to 8 $g/cm^3$, or from 0.8 to 6 $g/cm^3$, or from 0.8 to 4 $g/cm^3$, or from 0.8 to 3 $g/cm^3$, or from 0.8 to 2 $g/cm^3$, for example from 1 to 3 $g/cm^3$, or from 1 to 2 $g/cm^3$.

In an embodiment of the present invention, the items forming the feed composition may be pre-sorted manually, for example based on their origin. In this event, all window frames are collected, all tubes might be collected to give another feed composition etc. Pre-sorting the items based on their origin could be a way to enhance material purity with little extra effort. Moreover, having a feed composition, which comprises solely monomaterials is considered advantageous. In an embodiment, the feed composition contains less than 5 wt.% of composite materials. A composite material in the present context is a laminate or other matter which comprises more than one polymer. For example, an item comprising PVC and PP is a composite material, while an item comprising section of soft PVC and others of rigid PVC could be considered a monomaterial.

At least two steps can be performed during the pre-process to obtain a stream of pieces SP from a feed composition comprising some of the above identified items. In other words, the pre-process aims to separate the stream of pieces **SP** from some other items present in the feed composition.

The pre-process may comprise a step [a2], which is shredding the feed composition to items of at most 120 mm in size to form a stream of items. Preferably, the items are passed through a screening device, in which all items larger than 120 mm are retained and fed again into the shredding.

To achieve this, the shredded feed composition can be supplied via a conveying system, such as a conveyor belt, to a screen device which divides the feed composition into two fractions. Items of at most $\pm$ 120 mm in size fall through the openings of the screen device and are collected. Next these items can be transferred to a vibrating screen to remove free fine particles, e.g. those of at most 6 mm in size, which have not become stuck in cavities and holes or larger porous pieces. The fine particles can be mainly iron dust, corrosion dust, mineral dust particles and sand particles. The free fine particles pass through the vibrating screen forming a second fraction of items, while the items larger than the screen openings of the vibrating screen move across the screen surface and are collected forming a first fraction of objects. The first fraction of objects is employed as a stream of pieces *SP* provided in the first aspect of the invention.

In a further embodiment, the pre-process may include an optional, further step [a3], in which the first fraction of pieces is divided into a light fraction *LF* and a heavy fraction *HF*. This can be achieved by putting the first fraction of items on a further conveying system, which furthers the items to an air separator. In its basic working principle, an air separator contains an air flow in a direction opposite to gravity. The first fraction of pieces is brought in contact with the air flow. Objects of high density, such as glass and metal fall down and form the heavy fraction *HF* while light pieces, such as those of plastic are pulled by the air flow in its directions, and then collected as light fraction *LF*. The light fraction *LF* of pieces can be employed as stream of pieces *SP* provided in the first aspect of the invention. Whether or not this embodiment is useful depends on whether the feed composition comprises heavy non-plastic items, such as glass, stone, concrete and metal.

Next, in step ii) of the first aspect of the invention, an aqueous phase *AP* is added, wherein the aqueous phase *AP* has a density *D*. In general, the aqueous phase *AP* having a density *D* can be of any kind known to and considered suited for the present purpose by a skilled person. For example, the aqueous phase *AP* can be a solution of one or more salts, or a suspension of at least one sort of particles *PP,* or a suspension of at least one sort of particles *PP,* in which also one or more salts are dissolved.

In a first variant, the aqueous phase *AP* is a suspension comprising at least one sort of particles *PP*. The particles *PP* can be of any kind and specification known to and considered generally suitable by a skilled person for the present purpose. Often, the particles *PP* are in form of powder particles prior to preparing a suspension. The particles *PP* can be soluble, partially soluble and insoluble in water. In the present context, the particles *PP* are rated insoluble in water, if less than 0.1 g/l of these particles can be dissolved within 1 hour under stirring in water of pH=7 at a temperature of 20 °C, 1 bar atmospheric pressure. Insoluble means that substantially all particles *PP* added to a quantity of water as specified above form a precipitate. On the other hand, the particles *PP* are rated soluble, if 20 g/l or more of these particles are dissolved, under the conditions specified above. Soluble means that no precipitate remains or is formed. Partially soluble relates to powder having a solubility in the range from 0.1 to less than 20 g/l, at the conditions described before. Solubility data is available in reference books, such as the CRC Handbook of Chemistry and Physics, at the IUPAC in the Solubility Database (https://srdata.nist.gov/solubility/index.aspx) and text books. By preference, the particles *PP* are insoluble or partially soluble in water.

The particles *PP* can be of natural origin, e.g. chosen from the group of mineral materials consisting of clays, capable of forming a suspension that is stable in contact with water, which can belong to the families constituted by the group of kaolinites, such as, for example, kaolinite, dickite, halloysite, disordered kaolinites, serpentines; the group of micas, such as, for example, muscovite, biotite and paragonite, pyrophyllite and talc, illites and glauconite; the group of montmorillonites, such as, for example, beidellite, stevensite, saponite and hectorite; the group of chlorites; the group of vermiculites; the group of interstratified clays of which the unitary structure is a combination of the previous groups; the group of fibrous clays, such as, for example, attapulgite (palygorskite) and sepiolite; or the group formed by calcium carbonate (calcite), magnesium carbonate, dolomite (double carbonate of calcium and magnesium), calcium sulphate dihydrate (gypsum), barium sulphate, talc, alumina, silica, titanium dioxide and zirconium.

Further, the particles *PP* can be of synthetic origin. For example, they can be chosen from the group consisting of glass powders, calcium carbonate precipitate and metallic powders.

To create the conditions for a stable suspension by dispersing them in the aqueous phase, said particles *PP* may preferably have a particle size D50 of no more than 30 $\mu$m, preferably no more than 20 $\mu$m, and very preferably no more than 5 $\mu$m. For example, the powder particles may have a particle size (D50) in the range from 2.0 to 3.0 $\mu$m.

All description relating to particles *PP* is applicable to particles *PPn*.

In a preferred embodiment of the invention, the at least sort of particles *PP, PPn* is substantially insoluble in water.

In a further embodiment of the invention, the at least sort of particles *PP, PPn* is calcium carbonate. Its solubility in water is 0.013 g/l. Accordingly, these particles are insoluble in water.

In an embodiment of the invention, the density *D* of the aqueous phase *AP* is in the range from 1.2 to 1.35 g/cm$^3$, for example 1.2 g/cm$^3$, or 1.3 g/cm$^3$. Preparation of an aqueous phase *AP* using an insoluble mineral material is known, e.g. from US 2007/0272597 A1. For example, an aqueous phase *AP* having a density of 1.2 g/cm$^3$ can be prepared as a stirred suspension of 362 g/l CaCO$_3$ (e.g. using Omyalite 90, a CaCO$_3$, with particle size D$_{50}$ = 1.0 $\mu$m, and D$_{98}$ = 4 $\mu$m available from Omya Company). Similarly, an aqueous phase *AP* having a density of 1.25 g/cm$^3$ can be prepared as a stirred suspension of 490 g/l of CaCO$_3$ (PolCarb 40). Similarly, an aqueous phase *AP* having a density of 1.35 g/cm$^3$ can be prepared as a stirred suspension of 714 g/l of CaCO$_3$ (PolCarb40). The density *D* in the present context of aqueous phases is defined as mass per volume, e.g. g/l at 20 °C.

In another embodiment, the aqueous phase *AP* can be a solution, which comprises one or more salts. In this embodiment, the aqueous solution *AP* is formed by dissolution of this one or more salts in water. The one or more salts can be an organic or an inorganic, preferably an inorganic salt. Any salt and any number of salts can be employed in this regard, which known to and considered useful by a skilled person in the present context. The salt(s) may have one or more ions, for example mono-, di- or trivalent cations, and/or mono- through hexavalent anions.

The aqueous phase *AP* comprises water and may further comprise up to 80 wt.% of one or more salts. The maximum concentration of a salt depends on its solubility. A skilled person knows where to look up such information, or to conduct a simple experiment to find out by himself. A source to look up the maximum concentration of a certain inorganic salt at a given temperature, e.g. 20 °C, is the CRC Handbook of Chemistry and Physics, 95th edition (2014), Section 5-190 to 5-195.

For example, the aqueous phase *AP* may comprise up to 65, 60, 55, 50, 45, 40, 35, 30, 25, 20, 15, 10 wt.% of one or more salts. Occasionally, the aqueous phase comprises at least 1, 2, 3, 4 or at least 5 wt.% of one or more salts. Preferably, the aqueous phase *AP* may comprise one or more salts in the range from 1 to 80 wt.%, 5 to 80 wt.%, 10 to 80 wt.%, 10 to 70 wt.% 10 to 65 wt.%., 10 to 60 wt.%, 10 to 55 wt.%, 10 to 50 wt.%, 10 to 45 wt.%, or 10 to 40 wt.% of one or more salts. Preferably, all the above wt.% of salt in water refer to a temperature of 20 °C, and the wt.% refer to the total amount of the aqueous phase *AP.*

Preferred salts to be dissolved in the aqueous phase *AP* are selected from the group consisting of: group Ia,b or IIa,b -halides, -carbonates, - acetates, - phosphates, -nitrates, -sulfates, and -hydroxides; yet more preferred are group Ia,b hydroxides, -halides, such as NaCl ,$CaCl_2$, $K_2CO_3$ and $ZnCl_2$.

In general, the density *D* of an aqueous phase *AP* can be adjusted in a wide range from >1.0 g/cm³ to roughly 2.0 g/cm³. So, an example of an aqueous phase of a density *D* of 1.96 is an aqueous phase with 70 wt.% $ZnCl_2$ at 20 °C, based on the total amount of the aqueous phase. An aqueous phase with a density *D* of 1.35 can be obtained by dissolving 35 wt.% of $CaCl_2$.

A list of aqueous phases of dissolved salt and densities thereof at 20 °C are shown in the following table:

| Density (@ 20 °C) | Solution of salt in an aqueous phase, value indicates wt% of salt | Density (@ 20 °C) | Solution of salt in an aqueous phase |
|---|---|---|---|
| 1.1 | 12% $CaCl_2$; 11 % $ZnCl_2$ | 1.6 | 52 % $ZnCl_2$; 55 % $K_2CO_3$ |
| 1.2 | 22% $CaCl_2$; 21 % $ZnCl_2$ | 1.7 | 57 % $ZnCl_2$ |
| 1.3 | 31 % $CaCl_2$; 31% $ZnCl_2$; 30 % $K_2CO_3$ | 1.8 | 62,5 % $ZnCl_2$ |
| 1.4 | 39 % $CaCl_2$; 39% $ZnCl_2$; 39 % $K_2CO_3$ | 1.9 | 67 % $ZnCl_2$ |
| 1.5 | 46 % $ZnCl_2$; 47 % $K_2CO_3$ | 2.0 | 71,5 % $ZnCl_2$ |

A skilled person can calculate the approximate density $D_{soln.}$ for a salt solution depending on the salt's concentration with ease and consider the maximum solubility of the specific salt in water. However, the exact density may deviate therefrom, due to certain effects when dissolving. Accordingly, the density should be tested and corrected by further addition of salt or water, or one should look into a textbook with tables regarding amounts of salt and resulting concentration.

At a temperature of 20 °C, the formula (2) is

$$D_{soln.} = \frac{mass\ (water) + mass\ (salt)}{Volume\ (water + salt)} \tag{2}$$

The maximum concentration of a salt in water @ 20°C and at other temperatures is found in literature, e.g. the CRC Handbook of Chemistry and Physics, 95th edition (2014), Section 5-190 to 5-195. Densities of aqueous phases for some salts are tabled for different temperatures in "Perry's Chemical Engineers' Handbook", 8th ed., McGraw-Hill, 2007, cf. Chapter 2, e.g. for NaCl cf. Table 2-90 and for $ZnCl_2$ cf. Table 2-105.

In an embodiment of the present invention, the aqueous phase *AP* has a density of 1.25 g/cm³. Such aqueous phase can be prepared as a dispersion of 490 g/l of $CaCO_3$ / 1 litre of water (PolCarb 40).

In a further embodiment, the aqueous phase *AP* comprises mostly one salt and water. For example, in the range from 50 to 100 wt.%, or from 60 to 100 wt.%, or from 90 to 100 wt.%, or from 80 to 95 wt.% of the salt(s) is a single compound; further, the aqueous phase *AP* may comprise small amounts of a second or more other salts, for example from 0 to 50 wt.%, or from 0 to 40 wt.%, or from 0 to 10 wt.%, or from 5 to 20 wt.%, all wt.% in this context based on the total amount of salt(s) used for and/or present in the aqueous phase *AP.*

In step iii) a common phase $P$ is formed of the stream of pieces and the aqueous phase $AP$. The forming can be achieved by any means known to and considered suited by a skilled person, including agitation. Preferably, the aqueous phase $AP$ as well as the common phase $P$ are agitated at least partially, yet more preferred throughout this step. For example, forming the common phase $P$ can be performed by pouring the stream of pieces $SP$ into the aqueous phase $AP$, or in case of a continuous or semi-continuous process by combining the stream of pieces $SP$ and a stream of the aqueous phase $AP$.

In step iv), the common phase $P$ is divided into a first intermediate phase $IPH$ and a second intermediate phase $IPL$, wherein the first intermediate phase $IPH$ comprises first pieces of a density of more than $D$ and the second intermediate phase $IPL$ comprises pieces of a density of $D$ at most. For example, step iv) can be performed in a tank or vessel. The pieces having a density of more than $D$ sink down in common phase $P$, while those pieces having a density of less than $D$ will swim on common phase $P$. The swimming pieces can be removed by, e.g. decantation or skimming. The sunken pieces can be removed from common phase $P$ by removal from the bottom through an outlet.

In an embodiment of the first aspect of the invention, steps i) - iv) are repeated n-times. In the first repetition, the first pieces obtained in the previous repetition are provided in step i) instead of the stream of pieces, in each further repetition, the first pieces obtained previously are provided in step i) of the new repetition. Alike, in each repetition, a further aqueous phase $APn$ having a further density $Dn$ is added in step ii) instead of the first aqueous phase $AP$. Similarly, the dividing in step iv) is made into a first intermediate phase IPH comprising first pieces of a density of more than $Dn$, and the second intermediate phase IPL comprises pieces of a density of $Dn$ at most. In a preferred embodiment of this, at least one of the densities $D$ and $D1$, $D2$, etc has a density in the range from 1.2 to 1.35 $g/cm^3$, as described before. Moreover, the aqueous phase $APn$ being the last repetition has preferably a density $Dn$ in the range from 1.2 to 1.35 $g/cm^3$, by preference with a $Dn$ of 1.35 $g/cm^3$. On the other hand, the aqueous phases which are used in all previous repetitions including the first aqueous phase $AP$ preferably have a density lower than 1.2. Employing more than one of steps i) - iv) appears useful to sort more than one kind of plastic material or to improve separation results.

In another embodiment of the first aspect of the invention, steps i) - iv) are repeated at least once. First, a stream of pieces SP is provided. An aqueous phase $AP1$ is added, wherein $AP1$ has a density $D1$ of 1.6 $g/cm^3$. For example, such an aqueous phase can be prepared by suspending magnetite powder in water. Magnetite can be purchased from LKAB Minerals in Lulea, Sweden. Both, the aqueous phase $AP1$ and the stream of pieces $SP1$, is combined and stirred to form a common phase $P1$, and then divided into a first intermediate phase $IPH1$ and a second intermediate phase $IPL1$, wherein $IPH1$ comprises pieces of a density of more than $D1$, and $IPL1$ pieces of a density of at most $D1$. $IPL1$ is separated and combined under stirring with another aqueous phase $AP2$, wherein $AP2$ has a density $D2$ of about 1.2 $g/cm^3$ to form another common phase $P2$. $P2$ is divided into a first intermediate phase $IPH2$ and a second intermediate phase $IPL2$, wherein $IPH2$ comprises pieces of a density of more than $D2$, and $IPL2$ pieces of a density of at most $D1$. $IPH2$ is separated from $IPL2$, and then the pieces found in $IPH2$ are separated from the liquid parts of intermediate phase $IPH2$. These pieces are shredded to particles according to step vi) in the first aspect of the invention and processed further as described there.

In a further embodiment of the just mentioned embodiment, steps i)-iv) are repeated twice (n=2) (a total of three runs). In addition to a first separation at a density $D1$ of 1.6 $g/cm^3$, and a second separation at a density of 1.2, intermediate phase $IPH2$ is combined under stirring with another aqueous phase $AP3$, wherein $AP3$ has a density $D3$ of 1.35 $g/cm^3$ to form another common phase $P3$. $P3$ is divided into a first intermediate phase $IPH3$ and a second intermediate phase $IPL3$, wherein $IPH3$ comprises pieces of a density of more than $D3$, and $IPL3$ pieces of a density of at most $D1$. $IPL3$ is separated from $IPH3$, and then the pieces found in $IPL3$ are separated from the liquid parts of intermediate phase $IPL3$. These pieces are shredded to particles according to step vi) in the first aspect of the invention and processed further as described there.

In step v), the pieces of the first intermediate phase $IPH$ are separated from the rest of the first intermediate phase. As this is a solid liquid separation, it is easy to obtain, and a skilled person can use any means or technique known to him, which he considers suited. For example, the first intermediate phase $IPH$ may be treated in a centrifuge, a cyclone, a tumbler, a rotating tube, air jet, vacuum, and the like, or just poured over a sieve or grid with a suited mesh size, such as about 1, 2, 3 or 5 cm. Moreover, a combination of two or more of the just mentioned techniques and devices may be used.

Washing as in optional step v-a) is a technique well known and achievable by many means, such as rinsing water over the pieces etc. It could be a purpose of this step to remove any powder particles possibly sticking to the surface of the pieces.

Drying is further optional step v-b) applicable to the pieces. Drying of pieces is well known as such, and any technique and equipment known to and considered useful by a skilled person can be employed.

In step vi), the pieces are shred to particles, which form a stream of particles of a particle size in the range from 1 to 20 mm, for example, from 3 to 15 mm, from 3 to 12 mm, from 3 to 10 mm, or from 5 to 15 mm, from 5 to 12 mm, or from 5 to 10 mm, or from 3 to 8 mm.

Shredding as in step vi) or optional step [a2] can be performed by any means known to and considered possibly suited by a skilled person. Shredding equipment for this purpose can be selected from the group consisting of a single screw shredder and a double screw shredder in optional step [a2]; and granulators and fine grinders in step vi); and combinations thereof like a combination of a screw shredder and a fine grinder. Such equipment is available, for example, from Herbold Meckesheim GmbH, Meckesheim, Germany.

In an embodiment of the present invention, the stream of particles has a specific particle size distribution (PSD). Accordingly, for a stream of particles with a plurality of particles having a particle size in the range from 3 to 15 mm, D50 is in the range from 9 to 12 mm, D90 in the range from more than 12 to 13.8 mm, and D10 in the range from 4.2 to less than 9 mm. Similarly, for a stream of particles with a plurality of particles having a particle size in the range from 3 to 8 mm, D50 is in the range from 5.5 to 6.75 mm, D90 in the range from more than 6.7 to 7.95 mm, and D10 in the range from 3.05 to less than 5.5 mm.

In a preferred embodiment, the stream of particles has a residual moisture of less than 1 wt.%, for example 0.8 wt.% or less, or 0.6 wt.% or less, or 0.4 wt.% or less, or less than 0.2 wt.%, or less than 0.1 wt.% after step iv-b), and prior to step v) respectively. Often, the residual moisture is 0.02 wt.% or more. In a further embodiment, the stream of particles may pass a drier to arrive at the indicated residual moisture. In principle, any drier known to and considered possibly suitable by a skilled person can be employed. For example, such drier can be selected from the group consisting of a fluid bed drier, a ring drier, a hopper drier, a vacuum tumble drier, or a rotary drier.

In another preferred embodiment, so-called "fine particles" are removed from the stream of particles. These fine particles, also referred to as "dust", have a particle size $D_{90}$ of less than 2 mm, for example less than 1 mm, or less than 500, 200 or 100 $\mu$m. Often, the $D_{50}$ of these particles is less than 1 mm, for example less than 500 $\mu$m, or less than 200, 100 or 50 $\mu$m. In principle, any device known to and considered possibly suitable by a skilled person can be employed. For example, a zigzag tower or air suction with filter appear suited to separate the dust from the stream of particles. The particles are then conveyed to an electrostatic separation.

In a further preferred embodiment of the first aspect of the invention, the particles are exposed to a magnetic separator, in which magnetized or magnetic particles are removed from the particle stream. The magnetic separator may use a static magnetic field. Preferably, the magnetic separator is located upstream from step vii). I.e., the stream of particles first flows through the magnetic separator just described, then pass through an electrostatic separator in step vii).

In step vii), these particles are divided into at least a first fraction of particles *FPI* and a further fraction of particles FP2 using at least one electrostatic plastic separation. This can be done by any means and technique within the given framework which is known to a skilled person and considered possibly applicable.

In an embodiment of the invention, step vii) comprises at least two sub-steps.

In a first sub-step (vii-1), the particles are treated in a way that the particles are electrically charged in a charging system. Any charging system known to and considered suitable by a skilled person can be employed. In a preferred embodiment, the charging system is selected from the group consisting of a frictional charging system, a charging system with electrodes, or a plasma charging system can be employed. The extent of charging depends on the type of polymer particles and is characteristic. Vinyl halide polymer particles are usually more negatively charged after sub-step (vii-1) than before.

For example, a frictional charging device can be employed, in which the particles are charged by moving and agitating the particles through a drum with an agitator that includes radially extending arms to cause the particles to forcibly rub against each other and the components of the drum to acquire an electrical charge. Additional electrical charging inputs may be included to provide an additional charge to the particles if necessary to charge the particles to an appropriate amount needed for subsequent separation.

Charging systems with electrodes may operate via contact electrification or discharge electrification. A contact electrification system may be realized by simple mechanical contact, which may be provided by agitation, air blow, circulation and contact with charging materials such as charged electrodes. As an example, brushing over the plastics particles with a brush made from polyethylene filament may induce electrification. An example of discharge electrification may be realized by a corona discharge method, such as that used in copy machines or laser printers to charge toner, where a high voltage charge may be applied close to the particles and the corona discharge provides a charge to the particles.

In a second sub-step (vii-2), the electrically charged particles are provided to a separation unit, in which the charged particles are subjected to an electrical field. For this purpose, charged particles may be deposited from the charging system onto a transport system, for example, a conveyor system, which may then transport the charged particle to the separation unit.

As an alternative to the conveyor system, the transport system may be a track system with moving trays, or any other type of conveying/transport system which may have an insulating surface which prevents discharge of the plastic particles.

The separation unit can be of any kind known to and considered generally suited by a skilled person. Of these separation units, a free fall separator or a roller separator can be used, for example.

In a free fall separator, the electrically charged particles pass between a positive electrode plate and a negative electrode plate and are collected by two recipients, one on the side of the positive electrode and another one on the side of the negative electrode.

In a roller separator, the electrically charged particles are conveyed to a rotating roll, by which the particles are accelerated horizontally or at a slight inclination to propagate into recipients placed in direction of the particles' flight route.

An electrical field is applied along the particles flight direction. The electrical field will cause the particles to fly longer or shorter, depending on their charge, which depends on the polymer composition of each particle. So, they can be collected in different recipients.

In general, and with regard to all electrostatic separators, PVC particles are charged negatively and thus migrate towards the positive electrode, while other particles like PET and POM have a more positive charge, and thus migrate to the negative electrode, or not as much to the positive electrode like PVC. The voltage applied to the electrode may be up to 200 kV, for example from 2 to 180 kV, from 5 to 160 kV, from 5 to 140 kV, from 5 to 120 kV, from 5 to 100 kV, 5 to 80 kV, from 5 to 60 kV, from 5 to 40 kV, or from 5 to 20 kV. In a preferred embodiment, the electrode voltage is in the range from 5 to 20 kV, from 5 to 10 kV, or from 10 to 20 kV. In general, higher voltage induces a more intense electrical field, which facilitates separation of the particles. However, this effect flattens out when outpacing a certain voltage.

In an embodiment, the throughput of particles through an electrostatic separator can be from 100 to 2000 kg/hour, for example from 500 to 1500 kg/h. In another embodiment, two or more electrostatic separators are operated in parallel configuration to achieve higher throughput. Then a stream of charged particles is divided according to the number of separation system.

In a further embodiment of the first aspect of the invention, step vii) is repeated n-times, whereby the stream of particles is fed to an electrostatic separator, and a first fraction and a further fraction of particles is obtained, wherein the first fraction contains more vinyl halide polymer particles than the further fraction, and wherein the (n-1)th first fraction is used to feed the next electrostatic separator in the subsequent repetition.

In a preferred embodiment, an individual electrostatic separator may be employed for each of step vii) and each repetition. So, these electrostatic separators are arranged in a chain, the first fraction of particles obtained from a previous electrostatic separator conveyed to form the particle feed of the subsequent electrostatic separator. For example, a chain from 2 to 10 electrostatic separators may be arranged in a sequence, or 2 to 7, 2 to 5, 3 to 7, 4 to 7, 5 to 7 or 3 to 5 electrostatic separators.

In another embodiment, a single electrostatic separator can be employed in step vii), in batch operations. So, a portion of the stream of particles is fed into the electrostatic separator, and the first fraction of particles is obtained in a first run, which is used as particle feed in a second run. Similarly, a first fraction of particles in a previous run is used as particle feed in a subsequent run, and so on. For example, a number from 2 to 10 repeat runs could be applied to a particle feed, or 2 to 7, 2 to 5, 3 to 7, 4 to 7, 5 to 7 or 3 to 5 repeat runs.

In a further embodiment of the first aspect of the invention, both sub-steps of step vii), sub-step vii-1) and sub-step vii-2) are repeated n-times. Then sub-step vii-1) is always performed prior to to sub-step vii-2). This configuration may apply to both embodiments, a chain of two or more electrostatic separators, and a combination of a charging unit and a single electrostatic separator, where a first fraction obtained in a run is used as feed fraction in a subsequent run.

As already mentioned, step vii) could be repeated 2 to 7 times. In a preferred embodiment, the stream of pieces in step i) may comprise in an amount of 40 to 80 wt.% pieces of vinyl halide polymer, based on the total stream of pieces. Preferably, performing step vii) may give a first fraction of particles, in which 75 wt.% or more of the particles are vinyl halide polymer, the wt. based on the tot amount of the first fraction of particles. In case, step vii) is repeated once, a final first fraction comprising 86 wt.% or more particles of vinyl halide polymer could be obtained, the wt.% based on the total final first fraction. In case, step vii) is repeated for a second time, a final first fraction comprising 95 wt.% or more particles of vinyl halide polymer could be obtained, based on the total amount of this final first fraction. In case, step vii) is repeated for a third time, final first fraction comprising 98 wt.% or more particles of vinyl halide polymer could be obtained, based on the total amount of this final first fraction. The final first fraction in the present context is understood to be the vinyl halide polymer-rich fraction obtained after the last repetition. The lower the content of vinyl halide polymer in the stream of pieces and the lower the increase in concentration of particles of vinyl halide polymer per repetition, the higher the number of preferred repetitions to arrive at a concentration of 98 wt.% or more, preferably 99 wt.% or more of particles of vinyl halide polymer in the final first fraction.

In a further embodiment of the first aspect of the invention, a two-stage electrostatic separator is used. Accordingly, step vii-2) may comprise a two-stage separator. A frictional charging device as in step vii-1) may be used to make at least some of the plastic particles in the stream of particles more negatively charged than before.

Suited two-stage electrostatic separators can be of any configuration known to and considered suited for the present purpose by a skilled person. For example, a two-stage electrostatic separator, sometimes also referred to as a two-stage high-voltage electric field sorting system, comprises a first-level sorting section and a second-level sorting section. In direction of a path of flowing particles, the first-level sorting section, having an inlet and an outlet and two electrode plates, applies a high-voltage sorting section formed by these two electrodes into an inlet of the second-level sorting section, which is divided into two chambers formed by further electrode plates, where each of the two chambers applies another high-voltage sorting section formed by these further electrode plates, and one or more collection boxes are positioned at outlets of the two second-level chambers to receive the sorted particles of vinyl halide polymer.

The first-level sorting section includes a first electrode plate and a second electrode plate, which may be oriented to an inclination angle with relation to the vertical, e.g. each electrode plate 5° to 10° in opposite direction off the vertical axis. The outlet of the first-level sorting section connects to an inlet of the second-level sorting section.

The second-level sorting section may include a third to sixth electrode plate. The fourth and fifth electrode plates may form a first chamber, and the sixth and seventh electrode plate may form a second chamber. The fourth and fifth electrode plates are arranged adjacent and vertically installed; while the third and sixth electrode plates are oriented to an inclination angle with relation to the vertical, e.g. each electrode plate 10° to 20° in opposite direction off the vertical axis.

In a further embodiment of the process of the present invention according to the first aspect, a stream of pieces *SP* is provided in step i), and steps i) - iv) are repeated twice in the above described manner, with aqueous phase *AP1* having density *D1* of 1.20 g/cm$^3$ first, and *IPL1* being contacted with aqueous phase *AP2* of 1.35 g/cm$^3$ and *IPH2* being processed further in step v). Then step v) and vi) are performed as described before, and a washing and drying step is included either after step v) or after step vi). Then, step vii) being repeated 3-times, i.e. the particles conveyed to a first electrostatic separator, in which the particles are charged and divided into a first fraction *FP11* and a second fraction *FP12,* where *FP11* comprises more of vinyl halide polymer than *FP12.* Next, *FP11* is conveyed to a second electrostatic separator, in which the particles are charged and divided into a first fraction *FP21* and a second fraction *FP22,* where *FP21* comprises more of vinyl halide polymer than *FP22.* Further, *FP21* is conveyed to a third electrostatic separator, in which the particles are charged and divided into a first fraction *FP31* and a second fraction *FP32,* where *FP31* comprises the plastic composition of vinyl halide polymer. In an embodiment, stream *SP* had pieces of a size of 50 to 100 mm and comprised 30 to 40 wt.% particles comprising a vinyl halide polymer, the wt.% based on the total amount of stream *SP*. Resulting product *FP31* was composed of 95 - 99 wt.% of particles of vinyl halide polymer, based on the total amount of *FP31*.

In a further embodiment product *FP31* was subjected to steps viii) and ix) as described below, with methylethylketone forming the liquid organic phase, and additives residual to the vinyl halide polymer in *FP31* were removed.

In a further embodiment, the first fraction of particles is subjected to a further treatment in a step viii), comprising at least these sub-steps:

(i) dissolving the first fraction of particles and a liquid organic phase whereby a base composition is formed, and
(ii) applying a solvent-based separation,

wherein the purity of the vinyl halide polymer in the plastic composition is improved and/or at least some components of low molecular weight are removed.

Dissolving can be achieved by bringing the first fraction of particles into contact with the liquid organic phase. Agitation can be used to speed up and/or assist the dissolution in step ii). Agitation may be made by all means, and techniques known to and considered suited in the present process by a skilled person. For example, a mechanical stirrer can be used to stir the particles and the liquid organic phase during step ii). Another way to accomplish agitation may be applying a stream of gas. For example, air could be bubbled from the bottom of a vessel used in step ii) and through the base composition. Or a jet of air could be pressed through a nozzle in the vessel's wall.

The liquid organic phase can be of any kind known to and considered possibly useful by a skilled person to dissolve the particles of the first fraction of particles. The liquid organic phase comprises at least one, optionally a combination of two or more constituents. Main constituents of the liquid organic phase are organic solvents. The organic solvents forming the combination are miscible in each other, by preference. The liquid organic phase may contain further constituents, different from aforementioned organic solvents.

The liquid organic phase comprises at least one solvent selected from a group of solvent types consisting of ketones, ethers, aromatics, halogenated solvents, dimethylformamide (DMF) and Dimethyl sulfoxide (DMSO), or a combination of two or more solvents, either from the same or different solvent types. Examples of preferred solvent types are ketones and ethers.

Some examples of acyclic ketones are ethyl methyl ketone, diethyl ketone, methyl isobutyl ketone, methyl isoamyl ketone and di-(isobutyl) ketone. Some examples of cyclic ketones are cyclopentanone, cyclohexanone, cycloheptanone and isophorone.

In general, the solvent-based separation can be achieved by any means or technique known to and considered suitable by a skilled person to perform this step.

In an embodiment, the solvent-based separation in step ii) can be performed by dividing the base composition into a first and a further composition, wherein the first composition has a higher content of additives than the second composition, and wherein the second composition has a higher content of the vinyl halide polymer than the first composition.

For example, a membrane can be used for the dividing. A membrane in the present context is a selective barrier. That is, it allows some constituents to pass through but stops others. More precisely, a membrane is a selective barrier designed to process liquids, i.e., some constituents of a liquid pass through the membrane while others stop. These other constituents can be dissolved polymers, ions etc. Usually, the constituents to pass through a membrane as well as the constituents to be retained by the membrane are in liquid or at least swollen form. Preferably, the constituents to pass through a membrane as well as the constituents to be retained by the membrane are in liquid form. Such constituents of the base composition may be molecules, ions, and the like. As a note, a membrane is not a filter, and both serve for different purposes. Typically, membranes are used to separate components which are dissolved in a liquid, while filters are used to separate solid matter present in a liquid.

The membrane can be used as a selective barrier for vinyl halide polymer in a liquid organic phase. The vinyl halide polymer is supposed to be retained in the liquid organic phase while other constituents of the liquid organic phase are supposed to pass through the membrane. The part of the liquid organic phase which is retained by the membrane is described as the "second composition" in the present context. It is also referred to as "concentration step", from the view of retaining the vinyl halide polymer.

The vinyl halide polymer usually has a molecular weight of at least 5 kDa. For example, the vinyl halide polymer has a molecular weight of at least 7 kDa, or at least 10 kDa, or at least 15 kDa, or at least 20 kDa, or at least 25 kDa, or at least 50 kDa. For example, the vinyl halide polymer has a molecular weight in the range of 5 kDa to 150 kDa, or from 5 kDa to 120 kDa, or from 10 kDa to 100 kDa, or from 10 kDa to 80 kDa.

The further constituents to the base composition, e.g., so-called additives, which were processed into the vinyl halide polymer to tailor its properties, may have a molecular weight of less than 5 kDa. For example, the further constituents have a molecular weight of less than 4kDa, less than 3kDa, less than 2kDa or less than 1kDa. Very often, the further constituents have a molecular weight of at least 80 Da. The molecular weight of the further constituents can be calculated based on the molecular weight of the composing atoms.

Further constituents of the first fraction of particles polymers different from vinyl halide polymers can be additives, contamination or dirt, or a combination of two or more thereof. The number of additives and contaminants is illimited, and any one or more of these can be present. The additives can be categorized by structural features as well as by function.

For example, additives present in the particles can be antioxidants like UV stabilizers and flame retardants; rheological modifiers like softeners and plasticizers like epoxidized soy bean oil for the manufacturing of items or for the vinyl halide polymer after manufacture, e.g. during use; antioxidants; antistatic agents; heat stabilizers; lubricants and slipping agents; fillers; colorants, pigments and dyes; impact modifier like e.g. polyacrylate core shell impact modifiers and chlorinated polyethylene impact modifier; processing aids, e.g. chlorinated paraffine polyacrylates; blowing agents; antifog agents and biocides.

Based on structural features, additives can be organic, inorganic or hybrid; hybrid means having features of both organic and inorganic.

A group of more focused inorganic additives are lead compounds, i.e. salts and/or complexes comprising lead (Pb). Some of these are heat stabilizers and/or flame retardants. Examples of inorganic additives possibly present in vinyl halide polymer containing compositions are salts of Pb, Cd, Ca, Zn, Ba, and Sn, Ti and combinations thereof. These inorganic additives are often used as heat stabilizers, UV stabilizers, and fillers.

The organic additives can serve a wide range of duties, for example, as plasticizers and heat stabilizers. Examples of organic additives are carboxylates of heavy metals, such stearates of lead, calcium, barium and zinc; octoates of calcium, barium and zinc; dialkyltin laurate, - maleate and bis(isooctylthioglycollate); lead phthalate; lead maleate; dialkylphthalates and mixed aliphatic-aromatic phthalates; trialkyl mellitates; dialkyl adipates and sebacates. Two of the most known additives from this group are Di(2-ethylhexyl)-phthalate and normal and dibasic lead stearate, tribasic lead phthalate.

One characteristic feature of a membrane to retain polymers is the so-called molecular weight cut-off (MWCO). The MWCO value is, at which 90 %, by weight, of certain oligomers or polymers having the indicated $\overline{M_n}$ or above are retained by the membrane. The MWCO value of a polymer can vary depending on the solvent employed for dissolving the polymer, and temperature and external pressure applied to the solution. Accordingly, the MWCO is determined with regard to a reference polymer dissolved in a reference solvent and under further standardized conditions.

In a preferred embodiment of the present invention, the MWCO of the membrane is in the range from 3 kDa to 50 kDa, for example 5'000 Da, or 7'500 Da, or 10'000 Da, or 15'000 Da, or 20'000 Da, or 25'000 Da, or 30'000 Da.

The membrane employed in step iii) can be of any kind known to and considered for use in the present invention by a skilled person. For example, the membrane is based on a polymer film. Preparation and usage of membranes for separation purposes is quite known to a skilled person, see P. Marchetti et al., "Molecular Separation with Organic solvent Nanofiltration: A critical review", in Chemical Reviews, 2014, 114, 10735 - 10806.

In another embodiment, the separation is performed by addition of a further liquid phase which is intended and able to extract contents from the base composition. For example, the further liquid phase could by at least in part immiscible with the liquid organic phase, but the additives should be dissolvable therein. Then, a certain amount of the additives dissolved in the liquid organic phase will migrate into the further liquid organic phase for reasons of diffusion. As a result, the liquid organic phase enriches in vinyl halide polymer.

In a further embodiment of the first aspect of the invention, at least one selected from the group consisting of feed composition, stream of pieces, fraction of objects, particles, fraction *HF* or intermediate phase *IP* and intermediate phase *IPn* is divided into at least two by color using a camera. For example, the camera could be used to divide it into white and not-white species.

A second aspect of the invention is a vinyl halide polymer obtainable by a process as described regarding the first aspect of the invention or one or more of the embodiments relating thereto. Features and description relating to the first aspect of the invention and its embodiments are also applicable to the second aspect.

In an embodiment of the second aspect, the vinyl halide polymer comprises less than 3 wt.%, for example less than 2, 1.5, 1 or less than 0.5 wt.% of polymers other than the vinyl halide polymer. Often a content of 97 %, 98% or 99 % of vinyl halide polymer, based on the total amount of vinyl halide polymer, is achieved.

A third aspect of the invention is an article comprising a vinyl halide polymer obtainable by the process according to the first aspect of the invention or any one of its embodiments. Features and description relating to the first aspect of the invention and its embodiments are also applicable to the second aspect.

The article can be of any kind known to and considered suited by a skilled person. For example, the article may be selected from the group consisting of a fiber, a filament, a textile, a film and a formed body, such as pipe, tube or profile, or an object of more complex geometrical shape.

A fourth aspect of the invention is a method of manufacturing an article comprising a vinyl halide polymer obtainable by the first aspect of the invention, or an article comprising a vinyl halide polymer according to the second aspect. This method may include a providing of the vinyl halide polymer as a result from the process of the first aspect, and forming the vinyl halide polymer wherein the article is obtained.

A fifth aspect of the invention is an apparatus comprising at least these modules:

(A) a feeder;
(B) a density separator for solids in a liquid carrier;
(C) A dryer
(D) An electrostatic plastic separator.

The apparatus of this aspect of this invention is suited and configured to run a process according to the first aspect of the invention. The items of the apparatus are arranged in the order of the numbering, by preference. However, further modules may be arranged between two of the above, or before module (A), or after module (D), or two or more thereof.

For example, the apparatus may comprise further a second, third module (B2), (B3) etc., each of which is a density separator. Further, the apparatus may comprise a granulator module (C2), which is arranged downstram of (C) and upstream of (D). Also, the apparatus may comprise a dedusting module (C4).

The feeder can be of any kind known to and considered suited by a skilled person. The feeder may contain further modules, such as a shredder, to reduce a feed composition of item to a size of at most 120 mm. The feeder may also comprise a separator which separates items of at most 40 mm, or at most 30 mm, to obtain a feed composition of items of a size in the range from 40 to 120 mm, or from 30 to 120 mm.

The density separator for solids in a liquid carrier can be of any kind known to and considered suited by a skilled person. In a simple configuration, the density separator can be a tank equipped with at least one inlet, a stirrer, a bottom outlet and an outlet in an upper region. Providing as in step i) of the first aspect of the invention can be accomplished by feeding a stream of pieces *SP* and an aqueous phase *AP* with density *D* through one of the inlets, of feeding both through different inlets. In the latter event, the pieces *SP* could be fed via a sluice, and the aqueous phase *AP* through a tube. The content of the tank is stirred. A first intermediate phase *IPL,* which comprises pieces whose density is higher than density *D* can be removed from the bottom outlet, while second intermediate phase *IPH,* which comprises pieces of lower density than *D* are removed through the outlet in the upper region of the tank, close to or at the surface of the volume of aqueous phase *AP* in the tank.

The pieces are then separated from the first intermediate phase *IPL,* optionally thoroughly washed with water and the dried in a dryer. Any device known to and considered suited by a skilled person can be used as dyer, for example a tumbler, centrifuge or cyclone.

An optional equipment is a shredder to reduce the items initially to a size of 120 mm at most. It appears also possible to feed pieces of this size directly into step i), and to omit this optional shredding step. In case, shredding is made, another optional step of device for dedusting appears reasonable.

The electrostatic plastic separator, often also referred to as EPS or separation unit, can be any model known to and considered suitable by a skilled person. The EPS often comprises a charging sub-unit and a separation sub-unit. The separation units described regarding step vii) of the first aspect of the invention are also suited as equipment of the apparatus.

Another aspect of the invention is a use of vinyl halide polymer in an article, wherein the vinyl halide polymer is obtained by the process according to the first aspect of the invention, or a vinyl halide polymer according to the second aspect. Features and description relating to the first and further aspects of the invention and its embodiments are also applicable to the present aspect if considered suitable.

A further aspect of the invention is use of a process comprising a density separation in a liquid phase followed by a electrostatic separation to obtain recycled PVC from plastic waste. Features and description relating to the first and further aspects of the invention and its embodiments are also applicable to the present aspect if considered suitable.

FIGURES

The invention is illustrated below by means of figures by way of example. The figures are not to scale and are not intended to limit the invention.

Fig. 1 is a schematic presentation of the process according to first aspect of the invention.

Fig. 2 is a schematic presentation of an embodiment of the first aspect of the invention, which details on an option of providing in step i).

Fig. 3 is a schematic presentation of an embodiment of the first aspect of the invention including further steps viii) and ix), i.e. a solvent-based separation.

Fig. 4 a schematic presentation of an embodiment of the first aspect of the invention in which steps i) - iv) are repeated.

Fig. 5 is a schematic presentation of a magnetic separator and magnetic separation step.

Fig. 6 shows an electric charging unit and an electrostatic separator.

Fig. 7 shows a two-stage electrostatic separator.

Fig. 8 shows a sequential configuration of two electrostatic separators.

Fig. 9 is a schematic presentation of an embodiment of the process of the first aspect of the invention.

DESCRIPTION OF THE FIGURES

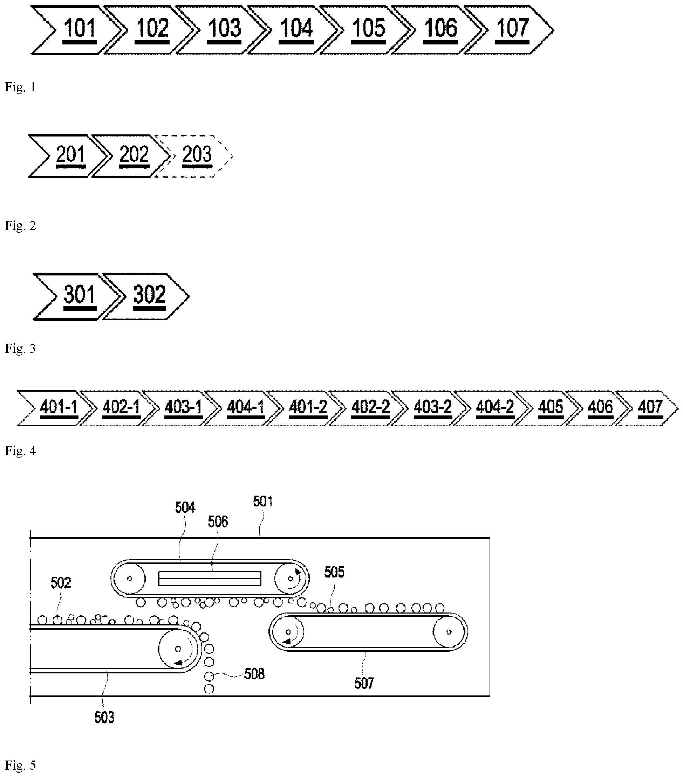

**Fig. 1** shows a schematic presentation of the process of the invention **100.** step i) **101** is providing a stream of pieces, which have a particle size of 120 mm at most, a density of 1.6 g/cm$^3$ at most and wherein at least 10 wt.% of the pieces comprise a vinyl halide polymer. In step ii) **102,** a first aqueous phase having a density $D$ is added. In step iii) **103** the stream of pieces and the first aqueous phase are combined to form a common phase. In step iv) **104,** the common phase is divided into a first intermediate phase and a second intermediate phase, wherein the first intermediate phase comprises pieces of a density of more than $D$, and the second intermediate phase comprises pieces of a density of $D$ at most. In step v) 105, the first pieces are separated from the first intermediate phase, and then shredded in step vi) 106 to particles, which form a stream of particles of a particle size in the range from 3 to 15 mm. In step vii) 107, the particles of the stream of particles are divided into a first and a at least one further fraction of particles using electrostatic plastic separation, wherein the first fraction contains more particles comprising the vinyl halide polymer than the further fraction(s).

**Fig. 2** shows a process as in Fig. 1, including further three optional steps [a1] **201,** [a2] **202,** and optionally [a3] **203.** These steps are an optional pre-treatment of the providing in step i). In step **201,** a feed composition comprising items is provided, wherein at least 10 wt.% of the items comprise the vinyl halide polymer. Step **202** is shredding the feed composition to items of a size of at most 120 mm to form a stream of items. In an optional step **203,** the first fraction of pieces is divided into a light fraction $LF$ and a heavy fraction $HF$ in a second separation step.

**Fig. 3** shows a process as in Fig. 1, including two further optional steps, which could follow step vii). In step viii) **301** a liquid organic phase is provided, wherein the liquid organic phase comprises at least one organic solvent. The particles obtained in the first fraction of step vii) are dissolved in the liquid organic phase. In step ix) 302 a solvent-based separation is performed, wherein the purity of the vinyl halide polymer in the plastic composition is improved and/or at least some components of low molecular weight are removed.

**Fig. 4** shows an embodiment of the invention, in which two density separations as in step i) - iv) are arranged in a sequential arrangement. Here, step i) **401-1** a stream of pieces is provided, which have a particle size of 120 mm at most, a density of 1.6 g/cm$^3$ at most and wherein at least 40 wt.% of the pieces comprise a vinyl halide polymer. In step ii) **402-1,** a first aqueous phase having a density $D1$ is added. In step iii) **403-1** the stream of pieces and the first aqueous phase are combined to form a first common phase $P1$. In step iv) **404-1,** the common phase $P1$ is divided into a first intermediate phase $IPH1$ and a second intermediate phase $IPL1$, wherein the first intermediate phase $HPI1$ comprises pieces of a density of more than $D1$, and the second intermediate phase $HPL1$ comprises pieces of a density of $D1$ at most.

Then, the phase comprising the vinyl halide polymer, for example the first intermediate phase if $D1$ was 1.2 g/cm$^3$, is provided in another step i) **401-2** as a stream of pieces. In another step ii) **402-2,** a further aqueous phase having a density **D2** is added, e.g. with **D2** around 1.4 g/cm$^3$. In another step iii) **403-2** the stream of pieces and the further aqueous phase are combined to form another common phase **P2**. In another step iv) **404-2**, the common phase **P2** is divided into another first intermediate phase **IPH2** and another second intermediate phase **IPL2**, wherein other first intermediate phase **IPH2** comprises pieces of a density of more than **D2**, and the other second intermediate phase **IPL2** comprises pieces of a density of **D2** at most.

In step v) **405**, the first pieces are separated from the other first intermediate phase **IPH2**, and then shredded in step vi) **406** to particles, which form a stream of particles of a particle size in the range from 3 to 15 mm. In step vii) **407**, the particles of the stream of particles are divided into a first and a at least one further fraction of particles using electrostatic plastic separation, wherein the first fraction contains more particles comprising the vinyl halide polymer than the further fraction(s).

**Fig. 5** is a schematic presentation of a magnetic separator **501** and magnetic separation step. A particulate material **502** is conveyed on a first conveyor **503**. A strong magnet **506** is positioned within a second conveyer **504**. Any magnetized particles or magnetic particles in the stream of particulate material **502** will be attracted by magnet **506** to the underside of the endless belt of second conveyer **504**. The conveyer **504** is operated so that the underside of the endless belt is moving to the right, as shown in fig. 5. As the magnetic particles that are caused to move to the underside of the endless belt of second conveyer **504** by the magnet **506** are moved to the right by movement of the conveyor belt, the magnetic field in their proximity gradually weakens until the magnetic particles **505** fall from the underside of conveyor belt **504**. The magnetic particles **505** fall onto third conveyor **507**. Third conveyor **507** can move the magnetic particles **505** to disposal, storage or for further treatment.

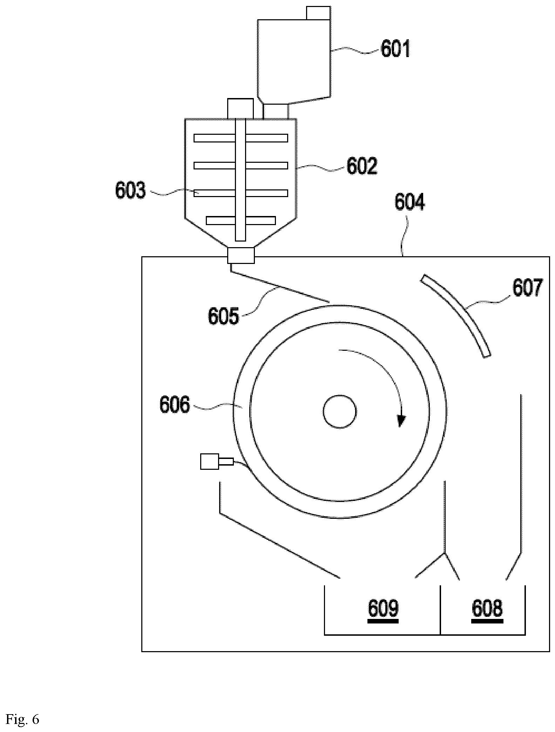

**Fig. 6** shows a device, which is a combined electric charging unit and electrostatic separator. The device includes: a feed reservoir **601** to receive the particles to be sorted, which connects to a charging unit **602** which frictionally electrifies the particles by a rotating stirring blades **603**; a conveyor **605** which conveys the charged particles from the charging unit to the electrostatic separator **604**; and the electrostatic separator **604** forming a static electric field between a rotary drum electrode **606** and an opposite electrode **607**, which serves as a separating space between the metal rotary drum electrode **606** and the metal opposite electrode **607**. First and second sorting trays **608** and **609** are disposed below the static electric field and the rotary drum electrode **606**. Incidentally, the outlet of the charging unit **602**, the electrodes **606** and **607**, and the first and second sorting trays **608** and **609** are covered by a shield box to keep an atmosphere for sorting. The two first and second sorting trays **608** and **609** are disposed along the rotating direction of the rotary drum electrode **606** to sort out two types of gravity-sorted fragments. Both trays **608, 609** may be disposed along the rotating direction of the rotary drum electrode **606** to sort out two types of waste plastic fragments according to the type of material.

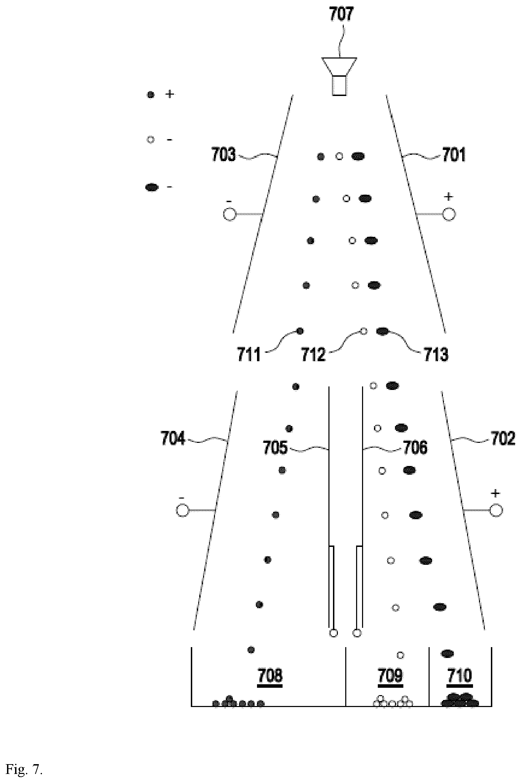

**Fig. 7** shows a two-stage electrostatic separator. A first-level sorting stage (top part of drawing) includes an inlet **707** at the top of the stage, a first electrode plate **703** and a second electrode plate **701**. Both electrode plates open with an inclination angle relative to vertical of 5° to 10°. The second-level sorting stage (extending from the bottom end of the first stage to the bottom of the figure includes a third electrode plate **704**, a fourth electrode plate **705**, a fifth electrode plate **706**, and a sixth electrode plate **702** arranged sequentially from left to right. The inclination angle of the third electrode plate **704** and the sixth electrode plate **702** is both time 10°-20°, relative to the vertical. The fourth rectangular electrode plate **705** and the fifth rectangular electrode plate **706** are installed vertically. In the bottom of the second stage, recipient trays **708, 709** and **710** are positioned to receive particles **711, 712** and **713**. During operation, electrodes **703, 704** and **706** are charged negatively, while electrodes **701, 702** and **705** are charged to the opposite.

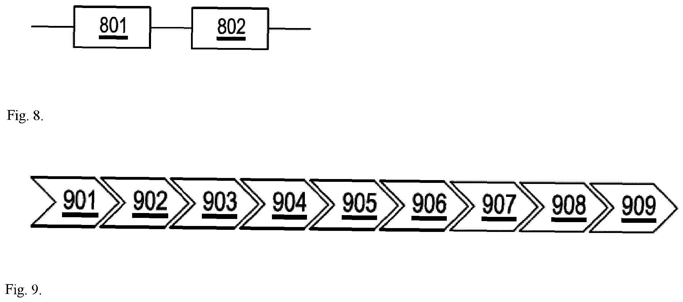

**Fig. 8** shows a sequential configuration of two electrostatic separators **801** and **802**, as in an embodiment of the present invention.

**Fig. 9** is a schematic presentation of an embodiment of the process of the first aspect of the invention. This embodiment comprises two density separations, e.g. a first separation at d=1.2 g/cm$^3$ **901** and a second separation at d=1.35 g/cm$^3$ **902**, where both times the sinking fraction is used further. Then, the pieces obtained are washed **903**, ground to particles of a size of 3 - 15 mm **904**, and dried to a moisture of 0.2 wt.% at most **905**. In **906**, the particles are subjected to dedusting. In **907**, the particles are first charged and then subjected to an electrostatic separation, in which a vinyl halide polymer is separated from other polymers. This step is repeated twice in 908 and **909**, to improve on the purity of the vinyl halide polymer.

TEST METHODS

a. Density

The density of samples of waste polymer, polymer articles and recycled polymer was determined according to DIN EN ISO 1183-1:2019, method A (immersion method). The samples were cut to a size of 10 mm $\times$ 4 mm $\times$ 30 mm. The balance employed was a Mettler Toledo XPR204 S in combination with density Kit XPR-S X SR-S. Deionized water was used as medium. All the experiments were performed twice.

The weight of the particle in air and the weight difference with the particle under water was determined and allows to calculate the density of the unswollen or swollen PVC article. A table showing the density of water at a given temperature is found in scientific textbooks and tables, e.g. the CRC Handbook of Chemistry and Physics, 95th edition (2014), section 6-7 and 6-8.

This density test is limited to samples which are dense and solid, i.e. have no closed pores. The test was used to determine the density of polymer samples, in particular PVC (waste or recycled) and plastic compositions comprising the vinyl halide polymer.

### b. Molecular weight of vinyl halide polymer

The number averaged molecular weight of a sample of a vinyl halide polymer is determined using a calibrated GPC (gel permeation chromatography), running THF as mobile phase at a flux of 0.4 ml/min at 40 °C. The eluate signal was recorded using a refractive index analyzer. The technical equipment used was an EcoSEC Ambient Temperature System, equipped with one TSKgel SuperH4000 and a SUPERH3000 column with 6.0 mm Id$\times$15 cm L, 3 $\mu$m particle size. Detector, pump oven and column oven were maintained at 40 °C.

### c. Density of liquid samples

The density of a liquid such as a suspension can be determined using a pycnometer or a Mettler-Toledo FX-30330857 Densito handheld Density Meter. It is measured at 20 °C.

### d. Weight of a polymer sample

The weight of a sample was determined using a Mettler Toledo XPR204S.

### e. Solubility in water

The solubility of a substance in water is determined this way. A beaker is filled with 1000 ml of water and adjusted to a pH=7, a temperature of 20 °C and stirred. Then, the substance (in form of a powder) is added in small quantities until it does not dissolve any more. This point is reached, when, after having added a volume of the substance, solid residue remains after 5 minutes of continued stirring.

### f. Size of pieces (cm) and particles (mm)

The size of pieces in the mm-range and above are measured using a Retsch AS300 for pieces and particles in the range from 20 $\mu$m to 40 mm, and a Retsch AS 450 for particles up to 125 mm.

### g. Mean particle size in suspension

The mean particle size in suspension is measured using a Mastersizer 3000+ ultra, available from Malvern Instruments Ltd., UK, according to the user manual, using the laser deflection method. The sample is suspended in demineralised water (Direct-Q 3UV, Millipore, water quality: 18.2 M$\Omega$cm) to obtain a 10 mL suspension with a concentration of 1 g/L. The suspension is treated with the ultrasound probe (UW 2070, Bandelin electronic, 70 W, 20 kHz) for 1 min.

### h. Particle size and core size of the solid (dry)

The particle size and core size of the solid are measured using a Camsizer XT, available from Retsch Technology GmbH, Deutschland according to the user manual. The software gives the D10, D50 and D90 values for a sample, according to ISO13322-2:2006-11.

### i. Determination of vinyl halide polymer concentration (particles)

The concentration of PVC particles prior and after electrostatic separation steps can be determined using a scanning NIR-spectrometer for granulates and flakes, available as an instrument identified as "sIRoGran" by IoSys - Dr. Timur Seidel e.K. in 40882 Ratingen, Germany.

### j. Plasticizer analysis

Plasticizer analysis was performed in double by a Soxhlet extraction using MTBE as solvent during at least 8h (2x1.5g PVC material; ±150ml methyl tert-butyl ether bp=55°C). The amount of extract (%) is determined gravimetrically. The extract is analyzed by NMR, HPLC-MS and GC-MS to identify and quantify the plasticizers.

k. residual moisture

The residual moisture of particles or powder was determined using a Mettler Analyzer HB43-S and a sample of 10 g of the particles or powder.

EXAMPLES

The invention is further illustrated by examples below. The invention is not limited to the examples.

Materials

PolCarb 40 is a ground calcium carbonate produced from chalk by Imerys S.A., 4600 Vise, Belgium. It has a particle size D50 = 2,4 $\mu$m, determined according to ISO13322-2:2006-11 with a Camsizer XT as described above, and an apparent density of 0,530 kg/m$^3$, determined according to ISO 60 using a measuring cup of 100 cm$^3$ (available under Art. no. 5346800 from Landgraf Laborsysteme HLL GmbH, Langenhangen, Germany).

The 35 wt.% suspension of $K_2CO_3$ in Example 3 is based on a commercial solution available from Vynova International. The commercial solution has 50 wt.% of K2CO3 and a density of 1.54 g/cm3 at 20 °C and 1 bar ambient pressure. Water is added to adjust this solution to 35 wt.%.

Example 1

A big bag of a waste stream comprising plastic waste (windows, doors, sealings) from deconstruction of a family home in East Belgium was obtained from a building waste recycler. By visual inspection, approximately 50 to 70 % of the volume was plastic, rest wood, metal, concrete and so on. A sample of 20 kg of the waste from the big bag was sawed to pieces of max. 10 cm in size. These pieces were poured into an aq. suspension of $CaCO_3$ which had a density of 1.25 g/l. The suspension was prepared by suspending 490 g $CaCO_3$ (PolCarb 40) per each litre of water under stirring. Those pieces found swimming were collected for further use in other plastic recycling or thermal processes. Those pieces found sinking were collected for PVC recycling. An analysis of the materials revealed this:

| Fraction | Material | Amount (estimated) |
|---|---|---|
| Swimming fraction | Many plastics like polyolefines, silicones and the like; foamed plastics; wood; paper; carton; plasticized PVC from seals. Polystyrene, PMMA | 22 wt.% of total 20 kg sample |
| Sinking fraction | Plastic parts from rigid PVC, filled plastics, glass, mineral materials like concrete, crosslinked polymers, metals; | 78 wt.% of total 20 kg sample |

The sinking fraction was separated from the aq. solution by sieving and yielded 15.5 kg of a so-called PVC-rich feed. The PVC rich feed was thoroughly rinsed with water and dried by centrifugation to a residual moisture of 0.2 wt.% using a HVST 150/150 Series (available from Herbold-Meckesheim GmbH, 74909 Meckesheim, Germany). Next, the dried PVC rich feed was ground to plastic granulate of approx. 5 mm in size with a Pallmann mill. Dust and metallic or conductive particles were removed using a zigzag tower followed by a magnetic separator.

The plastic granulate was placed in the fluidized bed charging unit of the electrostatic free-fall separator with PVC lining. The plastic granulate was charged at an air velocity of 5.2 m/s for 4 min at a temperature of 25°C and a relative humidity of 25%. An outlet at the bottom of the fluidized bed charging unit was then opened and the charged granulate was separated by material in the electrostatic field of the free-fall separator (field strength 4.5 - 2.0 kV/cm at a potential of ±72 kV). The PVC fraction into collection boxes 5 to 8, and the rest fell into collection boxes 1 to 4. The originally mixed plastic waste was divided into a PVC fraction and another fraction with success.

Example 2

A big bag of a waste stream comprising plastic waste (windows, doors, sealings) from deconstruction of a family home in East Belgium was obtained from a building waste recycler. By visual inspection, approximately 50 to 70 % of the volume was plastic, rest wood, metal, concrete and so on. A sample of 20 kg of the waste from the big bag was sawed to pieces of max. 10 cm in size. These smaller pieces were poured into a suspension of $CaCO_3$ which had density of 1.25 g/l). The suspension was prepared by suspending 490 g $CaCO_3$ (PolCarb 40) per each litre of water under stirring. Those pieces found swimming were collected for further use in other plastic recycling or thermal processes. Those pieces found sinking were collected for PVC recycling. An analysis of the materials revealed this:

| Fraction | Material | Amount (estimated) |
|---|---|---|
| Swimming fraction | Many plastics like polyolefines, silicones and the like; foamed plastics; wood; paper; carton; plasticized PVC from seals. Polystyrene, PMMA | 5.8 kg of total 20 kg sample |
| Sinking fraction | Plastic parts from rigid PVC, filled plastics, glass, mineral materials like concrete, crosslinked polymers, metals; | 14.2 kg of total 20 kg sample |

The sinking fraction was separated from the aq. solution by sieving, and yielded 14.2 kg of a so-called PVC-rich feed. The PVC rich feed was thoroughly rinsed with water and dried by centrifugation to a residual moisture of 0.2 wt.% using a HVST 150/150 Series (available from Herbold-Meckesheim GmbH, 74909 Meckesheim, Germany). Next, the dried PVC rich feed was ground to plastic granulate of approx. 5 mm in size with a Pallmann mill. Dust and metallic or conductive particles were removed using a zigzag tower followed by a magnetic separator. The mixture was then subjected to a low-temperature, low-pressure oxygen plasma treatment (plasma power: microwave 300 W, process gas: 30 % O2 at a flow rate of approx. 60 sccm, pressure 48 - 50 Pa, treatment time 600 s). During the plasma treatment, the rotary drum remained in rotation at 40 rpm.

Then, the plasma-treated plastic mixture was charged in the fluidized bed charging unit (air velocity approx. 5 m/s) of the electrostatic free-fall separator for 2 min at 25°C and a relative humidity of 10 % and successfully separated into a PVC and a polypropylene fraction in the free-fall separator (field strength 4.5 - 2.0 kV/cm at a potential of ± 72 kV). A complete separation of the originally mixed plastic waste into a PVC fraction and another fraction was achieved with success.

Example 3

A big bag of a waste stream comprising plastic waste (windows, doors, sealings) from deconstruction of a family home in East Belgium was obtained from a building waste recycler. By visual inspection, approximately 50 to 70 % of the volume was plastic, rest wood, metal, concrete and so on. A sample of 20 kg of the waste from the big bag was sawed to pieces of max. 10 cm in size. These pieces were poured into an aq. solution of $K_2CO_3$, which had a density of 1.35 g/l. Those pieces found swimming were collected for further use in other plastic recycling or thermal processes. Those pieces found sinking were collected for PVC recycling. An analysis of the materials revealed this:

| Fraction | Material | Amount (estimated) |
|---|---|---|
| Swimming fraction | Many plastics like polyolefines, silicones and the like; foamed plastics; wood; paper; carton; plasticized PVC from seals. Polystyrene, PMMA | 22 wt.% of total 20 kg sample |
| Sinking fraction | Plastic parts from rigid PVC, filled plastics, glass, mineral materials like concrete, crosslinked polymers, metals; | 78 wt.% of total 20 kg sample |

The sinking fraction was separated from the aq. solution by sieving and yielded 15.5 kg of a so-called PVC-rich feed. The PVC rich feed was thoroughly rinsed with water and dried by centrifugation to a residual moisture of 0.2 wt.% using a HVST 150/150 Series (available from Herbold-Meckesheim GmbH, 74909 Meckesheim, Germany). Next, the dried PVC rich feed was ground to plastic granulate of approx. 5 mm in size with a Pallmann mill. Dust and metallic or conductive particles were removed using a zigzag tower followed by a magnetic separator.

The plastic granulate was placed in the fluidized bed charging unit of the electrostatic free-fall separator with PVC lining. The plastic granulate was charged at an air velocity of 5.2 m/s for 4 min at a temperature of 25°C and a relative humidity of 25%. An outlet at the bottom of the fluidized bed charging unit was then opened and the charged granulate was separated by material in the electrostatic field of the free-fall separator (field strength 4.5 - 2.0 kV/cm at a potential of $\pm$72 kV). The PVC fraction into collection boxes 5 to 8, and the rest fell into collection boxes 1 to 4. The originally mixed plastic waste was divided into a PVC fraction and another fraction with success.

REFERENCE NUMERALS

| 100 | Process of claim 1 |
|---|---|
| 101 | Step i) |
| 102 | Step ii) |
| 103 | Step iii) |
| 104 | Step iv) |
| 201 | Step [a1] |
| 202 | Step [a2] |
| 203 | Step [a3] |
| 301 | Step vii) |
| 302 | Step viii) |
| 401-1 | 1st run Step i) |
| 402-1 | 1st Step ii) |
| 403-1 | 1st Step iii) |
| 404-1 | 1st Step iv) |
| 401-2 | 2nd Step i) |
| 402-2 | 2nd Step ii) |
| 403-2 | 2nd Step iii) |
| 404-2 | 2nd Step iv) |
| 405 | Step v) |
| 406 | Step vi) |
| 407 | Step vii) |
| 501 | Magnetic separator |
| 502 | Particulate material |
| 503 | 1st Conveyor |
| 504 | 2nd conveyor |
| 505 | Magnetic particles |
| 506 | Magnet |
| 507 | 3rd conveyer |
| 601 | Feed reservoir |
| 602 | Charging unit |
| 603 | stirring blades |
| 604 | Electrostatic separator |
| 605 | conveyor |
| 606 | Rotary drum electrode |
| 607 | Electrode (opposite) |
| 608 | 1st sSorting tray |
| 609 | 2nd sorting tray |
| 701 | 2nd electrode plate |

(continued)

| | |
|---|---|
| 702 | 6th electrode plate |
| 703 | 1st electrode plate |
| 704 | 3rd electrode plate |
| 705 | 4th electrode plate |
| 706 | 5th electrode plate |
| 707 | Inlet |
| 708 | 1st tray |
| 709 | 2nd tray |
| 710 | 3rd tray |
| 711, 712, 713 | Particle |
| 801 | 1st electrostatic separator |
| 802 | 2nd electrostatic separator |
| 901 | 1st density separation |
| 902 | 2nd density separation |
| 903 | Washing |
| 904 | Drying |
| 905 | Grinding |
| 906 | Dedusting |
| 907 | 1st electrostatic separation |
| 908 | 2nd electrostatic separation |
| 909 | 3rd electrostatic separation |

## Claims

1. A process of making a vinyl halide polymer comprising at least these steps:

   i) Providing a stream of pieces,

   wherein the pieces have a size of at most 120 mm and a density of 1.60 g/cm$^3$ at most;
   wherein at least 10 wt.% of the pieces comprise the vinyl halide polymer;

   ii) Adding a first aqueous phase *AP,* wherein first aqueous phase has a first density *D;*
   iii) forming a common phase of the pieces and the aqueous phase *AP,*
   iv) dividing the common phase into a first intermediate phase *IPH* and a second intermediate phase *IPL,* wherein

   the first intermediate phase *IPH* comprises first pieces of a density of more than *D* and
   the second intermediate phase *IPL* comprises pieces of a density of *D* at most;

   v) separating the first pieces from the first intermediate phase *IPH,*
   vi) shredding the first pieces from step v) to particles, which form a stream of particles of a particle size in the range from 3 to 15 mm;
   vii) dividing the particles of the stream of particles into a first and at least a further fraction of particles using electrostatic plastic separation, wherein the first fraction contains more particles of the vinyl halide polymer than the further fraction(s).

2. The process of claim 1, wherein the providing of step i) comprises at least these steps:

[a1] Providing a feed composition comprising items, wherein at least 10 wt.% of the items comprise the vinyl halide polymer;
[a2] shredding the feed composition to items of a size of at most 120 mm to form a stream of pieces.

3. The process of claim 2, comprising a further step [a3] downstream of [a2], with
[a3] dividing the first fraction of pieces into a light fraction *LF* and a heavy fraction *HF* in a second separation step.

4. The process according to any one of the preceding claims wherein steps i) - iv) are repeated n-times, wherein in each repetition

- the first pieces obtained in the previous repetition are provided in step i) instead of the stream pieces;
- a further aqueous phase *APn* having a further density *Dn* is added in step ii) instead of the first aqueous phase *AP*;
- the dividing in step iv) is made into a first intermediate phase IPH comprising first pieces of a density of more than *Dn,* and the second intermediate phase IPL comprises pieces of a density of *Dn* at most.

5. The process according to any one of the preceding claims, wherein step vii) is repeated n-times, whereby the stream of particles is fed to an electrostatic separator, and a first fraction and a further fraction of particles is obtained, wherein the first fraction of particles contains more vinyl halide polymer particles than the further fraction, and wherein the (n-1) th first fraction is used to feed the next electrostatic separator in the subsequent repetition.

6. The process according to any one of the preceding claims, wherein a two-stage electrostatic separator is used in step vii).

7. The process according to any one of the preceding claims comprising downstream of step vii) at least

viii) the first fraction is dissolved in a liquid organic phase and
ix) a solvent-based separation is applied to the first fraction,

wherein the purity of the vinyl halide polymer is improved and/or at least some components of low molecular weight are removed.

8. The process of any one of the preceding claims, wherein at least one selected from the group consisting of feed composition, stream of pieces, fraction of objects, particles, fraction *HF* or intermediate phase *IP* and intermediate phase *IPn* is divided into at least two by color using a camera.

9. The process of any one of the preceding claims, wherein a step v-a) is performed after step v) and prior to step vi), with step
v-a) washing the first pieces and drying.

10. The process according to any one of the preceding claims, wherein step vii) comprises at least these sub-steps:

(vii-1) Treating the particles by which treatment the particles become electrically charged;
(vii-2) Applying an electrical field to the particles,
wherein the vinyl halide polymer particles are separated from others according to their electrical charge;
wherein the vinyl halide polymer particles form the first fraction.

11. The process according to any one of the preceding claims, wherein the at least one sort of powder particles *PP,* is substantially insoluble in water.

12. The process according to any one of the preceding claims, wherein the density *D* is in the range from 1.2 to 1.35 g/cm$^3$.

13. The process according to any one of the preceding claims, wherein the at least one sort of powder particles PP is CaCO$_3$

14. A vinyl halide polymer obtainable by a process according to any one of the preceding claims.

15. An article comprising a vinyl halide polymer as in claim 14, or obtainable by the process according to any one of claims 1 to 13.

16. The article according to claim 15, wherein the article is selected from the group consisting of fiber, a filament, a textile, a film and a formed body, such as pipe, tube, door, shutter or profile, or an object of more complex geometrical shape.

17. An apparatus comprising at least these modules, in the following order:

(A) A feeder;
(B) A density separator for solids in a carrier liquid;
(C) A drier;
(D) An electrostatic plastic separator.

18. A use of vinyl halide polymer in an article, wherein the vinyl halide polymer is obtained by the process according to any one of claims 1 to 13, or according to claim 14.

19. A use of a process comprising a density separation in a liquid phase followed by a electrostatic separation to obtain recycled PVC from plastic waste.

Fig. 1

Fig. 2

Fig. 3

Fig. 4

Fig. 5

Fig. 6

Fig. 7.

801 802

Fig. 8.

901 902 903 904 905 906 907 908 909

Fig. 9.

# EUROPEAN SEARCH REPORT

**Application Number**

EP 24 18 7509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2021 000353 U1 (BRINKHUS KUNSTSTOFFVERARBEITUNG GMBH [DE]) 11 February 2021 (2021-02-11) | 14-19 | INV. B29B17/02 B29B17/04 |
| Y | * figure 1 and the corresponding part of the description * | 1-13 | |
| X | GB 2 465 839 A (GREYHOUND POLYOLEFINS RES LTD [IE]) 9 June 2010 (2010-06-09) | 1-19 | |
| Y | * figures 1 and 2 and the corresponding parts of the description * | 1-13 | |
| X | US 2012/187227 A1 (ANDO KAZUO [JP] ET AL) 26 July 2012 (2012-07-26) | 14-19 | |
| Y | * figures 1 and 2 and the corresponding parts of the description * | 1-13 | |
| Y | US 7 759 458 B2 (SOLVAY [BE]) 20 July 2010 (2010-07-20) * the whole document * | 7 | |
| Y | WO 93/06934 A1 (DEVTECH LABS [US]) 15 April 1993 (1993-04-15) * page 10, lines 20 to 29 * | 1-13 | **TECHNICAL FIELDS SEARCHED (IPC)** B29B B29K |

The present search report has been drawn up for all claims

| Place of search | Date of completion of the search | Examiner |
|---|---|---|
| Munich | 5 December 2024 | Rüdiger, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7509

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| DE 202021000353 | U1 | 11-02-2021 | NONE | | |
| GB 2465839 | A | 09-06-2010 | NONE | | |
| US 2012187227 | A1 | 26-07-2012 | CN | 102574304 A | 11-07-2012 |
| | | | EP | 2484506 A1 | 08-08-2012 |
| | | | JP | 5578826 B2 | 27-08-2014 |
| | | | JP | 2011073408 A | 14-04-2011 |
| | | | US | 2012187227 A1 | 26-07-2012 |
| | | | WO | 2011040317 A1 | 07-04-2011 |
| US 7759458 | B2 | 20-07-2010 | AT | E391146 T1 | 15-04-2008 |
| | | | CN | 101061165 A | 24-10-2007 |
| | | | DE | 602005005852 T2 | 14-05-2009 |
| | | | EP | 1817366 A1 | 15-08-2007 |
| | | | ES | 2303281 T3 | 01-08-2008 |
| | | | FR | 2878250 A1 | 26-05-2006 |
| | | | JP | 2008520791 A | 19-06-2008 |
| | | | PL | 1817366 T3 | 30-09-2008 |
| | | | US | 2009203868 A1 | 13-08-2009 |
| | | | WO | 2006053907 A1 | 26-05-2006 |
| WO 9306934 | A1 | 15-04-1993 | AU | 1356692 A | 03-05-1993 |
| | | | WO | 9306934 A1 | 15-04-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070272597 A1

**Non-patent literature cited in the description**

- CRC Handbook of Chemistry and Physics. 2014
- Perry's Chemical Engineers' Handbook. McGraw-Hill, 2007
- **P. MARCHETTI et al.** Molecular Separation with Organic solvent Nanofiltration: A critical review. *Chemical Reviews*, 2014, vol. 114, 10735-10806